# EUROPEAN PATENT SPECIFICATION

(11) **EP 4 554 259 B1**
(45) Date of publication and mention of the grant of the patent: **07.10.2026**
(21) Application number: 23835580.4
(22) Date of filing: 05.07.2023
(51) Int. Cl.: H04W 4/18, G06T 7/00, G06V 10/70, H04W 24/02, H04L 41/16

(54) **TRANSMISSION ENTITY, RECEPTION ENTITY FOR AI/ML APPLICATION, DATA TRANSMISSION METHOD, AND DATA PROCESSING METHOD**
ÜBERTRAGUNGSEINHEIT, EMPFANGSEINHEIT FÜR EINE AI/ML-ANWENDUNG, DATENÜBERTRAGUNGSVERFAHREN UND DATENVERARBEITUNGSVERFAHREN
ENTITÉ D'ÉMISSION, ENTITÉ DE RÉCEPTION POUR APPLICATION AI/ML, PROCÉDÉ D'ÉMISSION DE DONNÉES ET PROCÉDÉ DE TRAITEMENT DE DONNÉES

(30) Priority: 07.07.2022 JP 2022109834
(43) Date of publication of application: 14.05.2025
(73) Proprietor: Sony Group Corporation, Tokyo 108-0075 (JP)
(72) Inventor: UCHIYAMA, Hiromasa, Tokyo 108-0075 (JP); TSUDA, Shinichiro, Tokyo 108-0075 (JP)
(74) Representative: Witte, Weller & Partner Patentanwälte mbB
(86) International application number: PCT/JP2023/025014
(87) International publication number: WO 2024/010049

(56) References cited:
- WO-A1-01/80561
- JP-A- 2006 229 569
- JP-A- 2016 163 242
- US-A1- 2014 022 329
- US-A1- 2019 110 020
- KARRAS TERO, AILA TIMO, LAINE SAMULI, LEHTINEN JAAKKO: "Progressive Growing of GANs for Improved Quality, Stability, and Variation", 26 February 2018 (2018-02-26), XP055851948, Retrieved from the Internet <URL:https://arxiv.org/pdf/1710.10196.pdf>

## Description

### Technical Field

The present disclosure relates to a transmission entity, a reception entity, a data transmission method, and a data processing method that are used for an artificial intelligence / machine learning (AI/ML) application.

### Background Art

AI/ML applications executed using cellular networks such as 5G, Beyond 5G, and 6G are in the process of being discussed. For example, it is conceivable that, in such an AI/ML application, input data acquired by a terminal apparatus with low computational power could be transmitted to a cloud server through a cellular network to perform inference using an AI/ML model by use of high computational power of the cloud server.

When input data acquired on a transmission side is transmitted to an AI/ML model on a reception side through a cellular network, as described above, and when volumes of the input data are large, it may take a long time to complete the transmission. In this case, the AI/ML model on the reception side is not allowed to start performing inference before the transmission of the large volumes of the input data is completed.

Non-Patent Literature 1 discloses a technology that divides, into pieces of smaller input data, large volumes of input data acquired on a transmission side, that transmits the pieces of smaller input data to an AI/ML model on a reception side through a cellular network, and that parallelizes inference processes performed using the AI/ML model to shorten the time taken until an inference result is obtained.

### Citation List

### Non-Patent Literature

Non-Patent Literature 1: "Edge Assisted Real- time Object Detection for Mobile Augmented Reality", The 25th Annual International Conference on Mobile Computing and Networking, August 2019, Article No.: 25, Pages 1-16.

Document US 2019/110020 A1 discloses an image data processing method which includes receiving, from an image sensor, frame image data of a frame at a first resolution, reducing a resolution of the frame image data to a second resolution, performing image recognition on the frame image data to determine one or more regions of interest (ROI) and a priority level of each of the one or more ROIs, and extracting portions of the frame image data corresponding to the one or more ROIs. The method further includes modifying a resolution of the portions of the frame image data corresponding to the one or more ROIs based on the priority level of the ROIs, and combining the resolution-modified portions of the frame image data corresponding to the one or more ROIs with the frame image data at the second resolution to generate output frame image data.

### Disclosure of Invention

### Technical Problem

The technology disclosed in Non-Patent Literature 1 is not allowed to obtain an inference result until transmission of all of the pieces of smaller input data obtained by the division is completed. However, the obtaining of a coarse inference result before a final inference result is obtained may be more advantageous in real-world applications. For example, the obtaining of a coarse inference result before a precise inference result is obtained is more advantageous when objects appearing in an image are classified on an automatic guided vehicle (AGV). Further, it is much more advantageous if an inference result is allowed to be updated in stages until a desired degree of accuracy is obtained.

The present disclosure addresses the issues described above, and it is an object of the present disclosure to provide a transmission entity and a reception entity that are used for an AI/ML application that enables an inference result to be updated in states until a desired result is obtained.

### Solution to Problem

The invention is disclosed by the appended claims.

### Brief Description of Drawings

[Fig. 1] Fig. 1 illustrates two examples of using AI/ML for a cellular network.
[Fig. 2] Fig. 2 illustrates three ways of executing an AI/ML application that is executed using a cellular network.
[Fig. 3] Fig. 3 illustrates an example of a splitting point in a neural network model.
[Fig. 4] Fig. 4 illustrates an example of performing distributed learning for an AI/ML application executed using a cellular network.
[Fig. 5] Fig. 5 illustrates various ways of performing distributed learning in an AI/ML application executed using a cellular network.
[Fig. 6] Fig. 6 illustrates an example of an AI/ML application that includes a multi-input AI/ML model.
[Fig. 7] Fig. 7 is a diagram used to describe a basic concept of the present disclosure.
[Fig. 8] Fig. 8 illustrating configurations of a transmission entity and a reception entity according to the present disclosure.
[Fig. 9] Fig. 9 illustrates an example of a configuration of a 5G system.
[Fig. 10] Fig. 10 illustrates an example of a configuration of a multi-input AI/ML model.
[Fig. 11] Fig. 11 illustrates an example of inputting two pieces of still-image data of different resolutions to the multi-input AI/ML model.
[Fig. 12] Fig. 12 illustrates methods for generating input data on the basis of a resolution of a still image.
[Fig. 13] Fig. 13 illustrates an example of inputting two pieces of still-image data of different regions to the multi-input AI/ML model.
[Fig. 14] Fig. 14 illustrates methods for generating input data on the basis of a region in a still image.
[Fig. 15] Fig. 15 illustrates a method for generating input data on the basis of a resolution of and a region in a still image.
[Fig. 16] Fig. 16 illustrates methods for generating input data on the basis of a frame rate for moving-image data.
[Fig. 17] Fig. 17 illustrates a first example of a method for generating input data on the basis of compression encoding performed on an image.
[Fig. 18] Fig. 18 illustrates a second example of the method for generating input data on the basis of compression encoding performed on an image.
[Fig. 19] Fig. 19 illustrates methods for generating input data on the basis of an error correction code.
[Fig. 20] Fig. 20 illustrates an example in which two pieces of input data are used for hard-combining.
[Fig. 21] Fig. 21 is a flowchart used to describe details of an operation performed upon hard-combining performed in the above-described case of using a robot.
[Fig. 22] Fig. 22 illustrates an example in which two pieces of input data are used for soft-combining.
[Fig. 23] Fig. 23 is a flowchart used to describe details of an operation performed upon soft-combining performed in the above-described case of using a robot.
[Fig. 24A] Fig. 24A illustrates a sequence when a robot in a factory performs automated driving while performing image recognition.
[Fig. 24B] Fig. 24B illustrates the sequence when the robot in a factory performs automated driving while performing image recognition.

### Mode(s) for Carrying Out the Invention

Embodiments of the present disclosure will now be described in detail below with reference to the drawings. In the figures, similar or corresponding structural elements will be denoted by the same reference symbol, and detailed descriptions thereof are omitted as appropriate.

The following is the configuration of the present disclosure.
1. Background
   1-1. AI/ML Application Executed Using Cellular Network
   **1-2.** Three Ways of Executing AI/ML Application
      **1-2-1.** Cloud Learning
      **1-2-2.** In-Device Learning
      1-2-3. Distributed Learning
   1-3. Multi-Input AI/ML Model
**2.** Basic Concept of Present Disclosure
   **2-1.** Transmission Entity and Reception Entity
   **2-2.** Configuration of Transmission Entity
   2-3. Configuration of Reception Entity
**3.** Multi-Input AI/ML Model According to Present Disclosure and Input Data
   **3-1.** Multi-Input AI/ML Model
   **3-2.** Method for Generating Input Data
      **3-2-1.** Generation of Input Data That is Performed on Basis of Resolution of Still Image
      3-2-2. Generation of Input Data That is Performed on Basis of Region in Still Image
      3-2-3. Generation of Input Data That is Performed on Basis of Resolution of and Region in Still Image
      **3-2-4.** Generation of Input Data That is Performed on Basis of Frame Rate for Moving Image
      **3-2-5.** Generation of Input Data That is Performed on Basis of Compression Encoding Performed on Image
      **3-2-6.** Generation of Input Data That is Performed on Basis of Error Correction Code
      3-2-7. Generation of Input Data That is Performed on Basis of Split of AI/ML Model
**4.** Details of Various Kinds of Movements According to Present Disclosure
   4-1. Timing of Switching Method for Transmitting Input Data
   4-2. Hard-combining
   4-3. Soft-combining
   4-4. Request to Start Transmitting Additional Input Data
   4-5. Request to Stop Transmitting Additional Input Data
   4-6. How to Provide Feedback Information
   4-7. Associated Information Serving as Feedback Information
   4-8. Change in Additional Input Data That is Performed on Basis of Associated Information
5. Functionality Expansion of Cellular Network According to Present Disclosure
   5-1. Network Slice for 5G System
   5-2. QoS Control for 5G System
   5-3. Multi-QoS Flow Control for 5G System
6. Examples
7. Conclusion

### <1. Background>

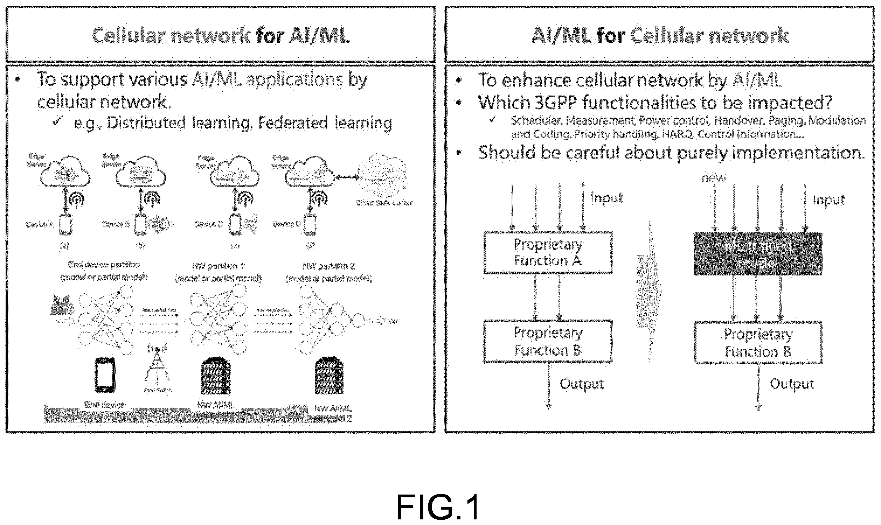

With respect to 3GPP securing artificial intelligence (SAI), studies (FS_AMMT) have been started to use AI/ML for cellular networks. Fig. 1 illustrates two examples of using AI/ML for a cellular network.

The first use example is an AI/ML application that is executed using a cellular network. In this case, it is necessary that the AI/ML application run on a cellular network smoothly. In the future, AI/ML applications are expected to come into wide use rapidly. This results in there being a need for a cellular network adaptable to such applications.

The second use example is the construction of a cellular network using AI/ML. The replacement of a portion of or all of the functions of a cellular network with AI/ML makes it possible to further optimize communication. In this case, it is expected that there is a need for not only replacement of algorithms but also, for example, a change in parameter for input and output.

### (1-1. AI/ML Application Executed Using Cellular Network)

The AI/ML application executed using a cellular network, that is, the first use example described above, is discussed in the present disclosure. Future cellular networks may not only simply provide communication functions but also provide computational power to an application that is executed using a cellular network. There is a need for high computational power particularly when computational power is provided to an AI/ML application, in order to perform inference processing in an AI/ML model at a high speed.

Specific examples of the AI/ML application executed using a cellular network could include applications related to, for example, extended reality (XR) such as virtual reality (VR), augmented reality (AR), and mixed reality (MR); automated driving; robotics; unmanned transport vehicles; image recognition; and sound recognition.

Low latency and high computational power are two necessary conditions necessary for a cellular network adaptable to AI/ML applications. These necessary conditions are defined as low latency and high computational power that are exhibited upon executing an AI/ML application. Thus, for example, not the low latency exhibited just between a terminal apparatus and a base station, but the low latency exhibited between the terminal apparatus and a server apparatus that performs inference processing in an AI/ML model, is necessary as the necessary condition of the low latency.

### (1-2. Three Ways of Executing AI/ML Application)

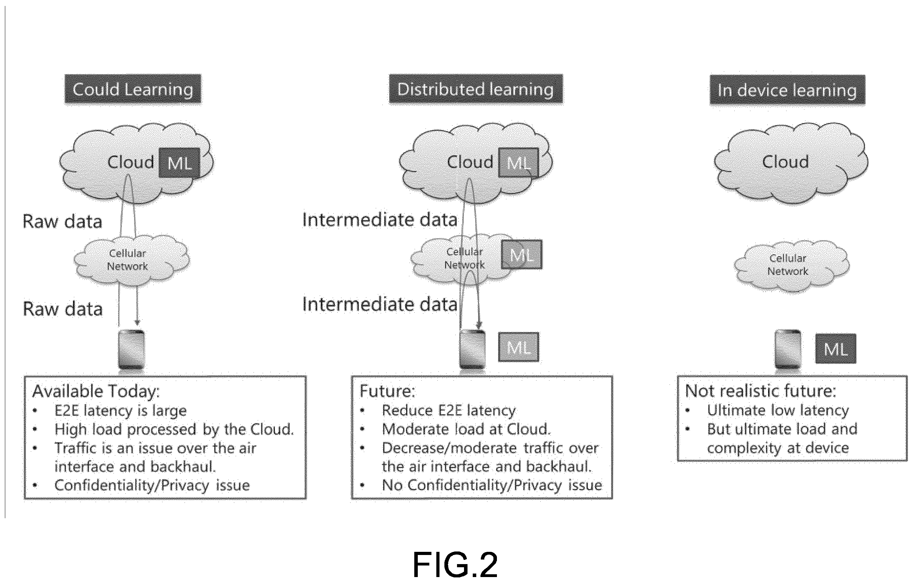

Fig. 2 illustrates three ways of executing the AI/ML application executed using a cellular network.

### (1-2-1. Cloud Learning)

The first execution way is cloud learning with which all of the processes of an AI/ML application are performed on a cloud-server side. When the cloud learning is applied, all of the processes of an AI/ML application are performed on a cloud-server side. Thus, it is not a problem if computational power of a terminal apparatus is relatively low. However, it is necessary that input data (raw data) that is necessary to perform processes of an AI/ML application be transmitted from the terminal apparatus to the cloud server. This may result in lack of bandwidth due to an increase in bandwidth use, and may result in an increase in latency.

### (1-2-2. In-Device Learning)

The second execution way is in-device learning with which all of the processes of an AI/ML application are performed by the terminal apparatus. When the in-device learning is applied, it is not necessary that input data be transmitted from the terminal apparatus to the cloud server. Thus, the second execution way is excellent in low latency, although it is not realistic for the terminal apparatus to perform all of the processes of an AI/ML application alone.

### (1-2-3. Distributed Learning)

The third execution way is distributed learning (Distributed Leering) with which processes of an AI/ML application are performed by nodes in a distributed manner, where the nodes are situated between the terminal apparatus and the cloud server. The distributed learning makes it possible to distribute calculation loads to the nodes. Further, pieces of input data are sequentially processed in a node and transmitted to a next node as pieces of intermediate data. This makes it possible to reduce an amount of data transmitted, compared to when input data (raw data) is transmitted to the cloud server. This results in avoiding the lack of bandwidth due to an increase in bandwidth usage, and the increase in latency. The third execution way is excellent in low latency. Further, depending on the type of AI/ML application, a lower latency can be achieved by using an edge server that is arranged in a cellular network.

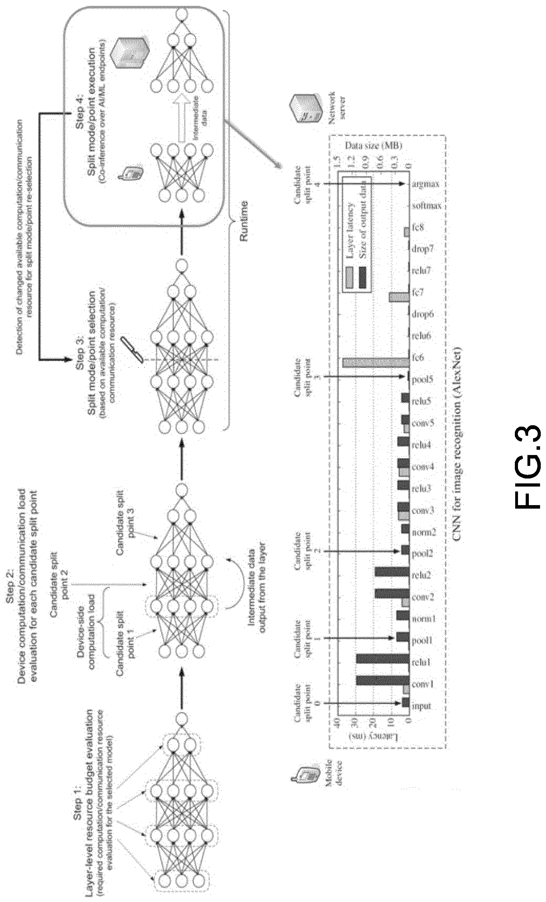

When the distributed learning is applied, which of the processes is to be performed by which of the nodes, is an issue. Fig. 3 illustrates an example of a splitting point in a neural network model that is an example of the AI/ML model. As can be seen from the figure, the calculation load in a node and the delay in transmission between nodes differ depending on a point at which split is performed. Thus, it is important to set a splitting point appropriately.

When the distributed learning is applied, an AI/ML model is split, and learning is performed. Here, each of AI/ML models obtained by the split performs learning depending on how the split is performed. When learning is completed, the AI/ML models being obtained by the split and having performed learning are assigned to the respective nodes. Upon inference, the nodes perform inference in a distributed manner.

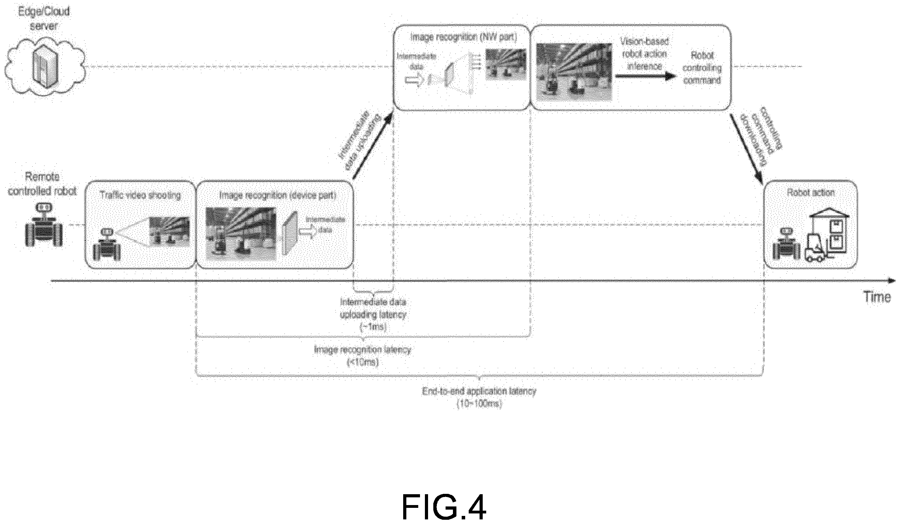

Fig. 4 illustrates an example of performing distributed learning in an AI/ML application executed using a cellular network. Here, Fig. 4 illustrates an example in which an image is captured by a robot and input to an AI/ML model, and necessary movement is performed. In this example, a portion of inference processes of a neural network model is performed by the robot after the image is captured by the robot. Thereafter, intermediate data output from an intermediate node in the neural network model is transmitted to an edge/cloud server. Here, the intermediate data has been compressed, and this results in a short transmission delay. The rest of the inference processes of the neural network model is performed on an edge/cloud-server side, and an instruction for movement that is given on the basis of a result of the inference is transmitted to the robot.

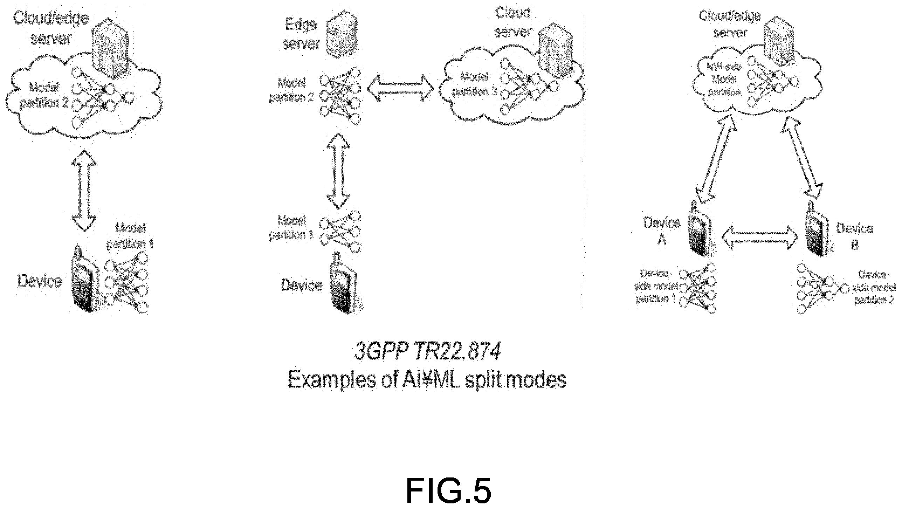

Fig. 5 illustrates various ways of performing distributed learning in an AI/ML application executed using a cellular network. Not only a most basic split between a terminal apparatus and a cloud server, but also, for example, split performed using an edge server or split performed between terminal apparatuses is also conceivable.

### (1-3. Multi-Input AI/ML Model)

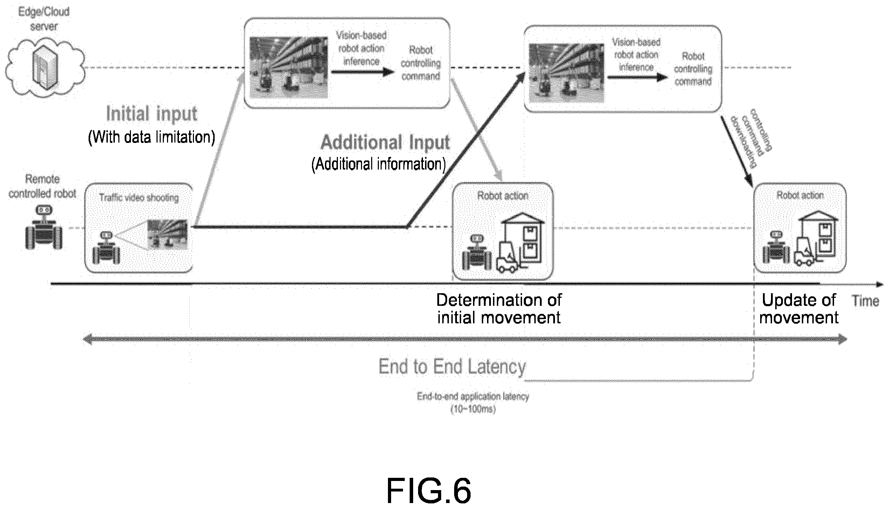

An AI/ML application that includes a multi-input AI/ML model is conceivable as an AI/ML application executed using a cellular network. Fig. 6 illustrates, as an example of the AI/ML application including a multi-input AI/ML model, a case of using a robot that moves in a factory.

In the example illustrated in Fig. 6, a robot extracts initial information (initial input) with a limited data amount from an image captured by the robot, and transmits the initial information to an edge/cloud server first. The edge/cloud server inputs the received initial information to a multi-input AI/ML model to acquire a coarse recognition result. The edge/cloud server transmits, to the robot, an instruction for initial movement on the basis of the coarse recognition result. For example, movement for avoidance is started on the basis of the coarse recognition result showing that an obstacle is situated ahead of the robot. When the robot receives the instruction for initial movement from the edge/cloud server, the robot starts the movement for avoidance in accordance with the instruction for initial movement.

Next, the robot extracts, from data of the above-described image captured by the robot, additional information (additional input) that is not included in the initial information, and transmits the additional information to the edge/cloud server. The edge/cloud server combines the received additional information with the previously received initial information, and inputs the combined pieces of information to the multi-input AI/ML model to acquire a detailed recognition result. The edge/cloud server transmits, to the robot, an instruction to update movement on the basis of the detailed recognition result. For example, a course of the movement for avoidance is corrected on the basis of the detailed recognition result showing that the obstacle situated ahead of the robot is a human, in order to secure adequate safety. When the robot receives the instruction to update movement from the edge/cloud server, the robot corrects the course of the movement for avoidance in accordance with the instruction to update movement.

An evaluation indicator such as acquiring an inference result within a specified time period xx with a degree of accuracy that is greater than or equal to yy, is important when the AI/ML application as described above is applied. In other words, an end-to-end latency that is exhibited from a robot starting transmission of initial information to the robot receiving an instruction to update movement that is given on the basis of a detailed inference result, is important. Further, when a robot sequentially transmits pieces of additional information in response to a request made by an edge/cloud server for additional information, and sequentially receives instructions to update movement that are given on the basis of the pieces of additional information, it is also necessary to consider the process of sequentially updating inference results until a desired degree of accuracy is obtained in a multi-input AI/ML model. In other words, it is necessary to consider latency of an AI/ML application in consideration of a request for additional information and the process of updating an inference result on the basis of the additional information.

### <2. Basic Concept of Present Disclosure>

It is an object of the present disclosure to provide a technology that enables an AI/ML application executed using a cellular network to update an inference result in stages until a desired result is obtained. In the present disclosure, a multi-input AI/ML model is used, and a feedback mechanism that causes a reception side to make a request to a transmission side for additional input data is provided, in order to achieve the object.

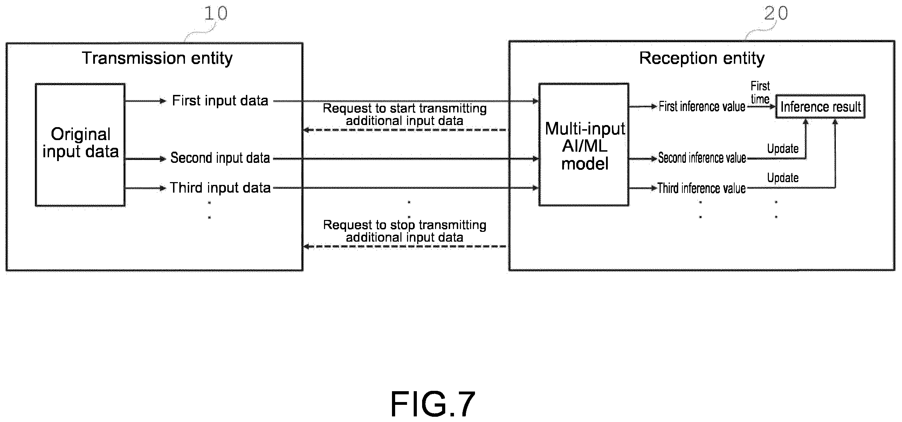

In particular, a transmission entity 10 generates, from original input data, a plurality of pieces of input data with a reduced data amount, and transmits a first piece of input data from among the plurality of pieces of input data to a reception entity 20 first, as illustrated in Fig. 7. The reception entity 20 inputs the first input data to a multi-input AI/ML model to acquire a first inference value, and sets the acquired first inference value as a first inference result. For example, when the AI/ML model is a neural network model that classifies objects appearing in an image and when neurons in an output layer respectively correspond to the types of objects (such as a human, luggage, and another robot), the type of object corresponding to a neuron for which a largest probability value is output from a softmax function is set to be the first inference result.

When a degree of accuracy of the first inference result is less than a certain specified threshold, that is, when, for example, the largest probability value output from the softmax function is less than another specified threshold, the reception entity 20 gives, to the transmission entity 10, feedback that indicates a request to start transmitting an additional piece of input data from among the plurality of pieces of input data. When the transmission entity 10 receives the feedback, the transmission entity 10 sequentially transmits, to the reception entity 20, second and subsequent pieces of input data from among the plurality of pieces of input data. The reception entity 20 sequentially inputs the second and subsequent pieces of input data to the AI/ML model to acquire second and subsequent inference values, and sequentially updates inference results on the basis of the second and subsequent inference values.

When the degree of accuracy of the first inference result is greater than or equal to the certain specified threshold, that is, when, for example, the largest probability value output from the softmax function is greater than or equal to the other specified threshold, the reception entity 20 gives, to the transmission entity 10, feedback that indicates a request to stop transmitting the additional input data. When the transmission entity 10 receives the feedback, the transmission entity 10 stops transmitting the additional input data.

### (2-1. Configurations of Transmission Entity and Reception Entity)

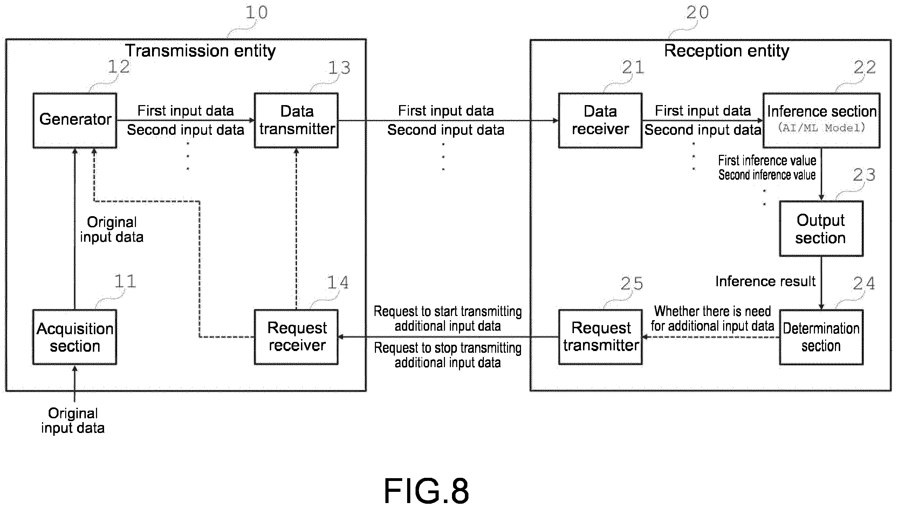

Fig. 8 illustrating configurations of the transmission entity 10 and reception entity 20 according to the present disclosure. Note that Fig. 8 illustrates logical configurations of the transmission entity 10 and the reception entity 20. Structural elements of each of the entities may be provided to a single apparatus, or may be provided to a plurality of apparatuses in a distributed manner.

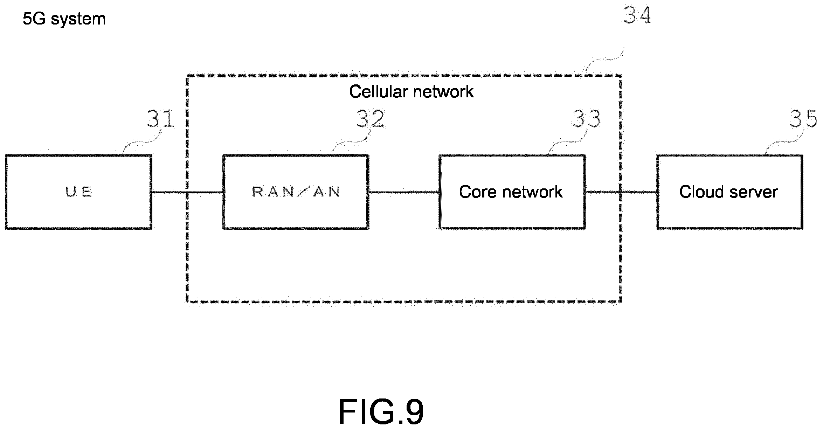

For example, the 5G system illustrated in Fig. 9 includes user equipment (UE) 31, a radio access network / access network (RAN/AN) 32, a core network 33, and a cloud server 35. A cellular network 34 includes the RAN/AN 32 and the core network 33. In this case, the structural elements of the transmission entity 10 may be provided to, for example, the UE 31 connected to the cellular network 34. Further, the structural elements of the reception entity 20 may be provided to, for example, the cloud server 35 connected to the cellular network 34.

Alternatively, a portion of or all of the structural elements of the transmission entity 10 may be provided to the UE 31, the RAN/AN 32, and the core network 33 in a distributed manner. Likewise, a portion of or all of the structural elements of the reception entity 20 may be provided to the R_AN/AN 32, the core network 33, and the cloud server 35 in a distributed manner.

In the 5G system illustrated in Fig. 9, the UE 31 and the R_AN/AN 32 are connected to each other via a wireless communication link. The RAN/AN 32 and the core network 33 are connected to each other via a wireless communication link or a wired communication link. The core network 33 and the cloud server 34 are connected to each other via a wireless communication link or a wired communication link.

For example, the cellular network 34 may be variously configured by the RAN/AN 32 or the core network 33 in response to a request made by the cloud server 35. Such a configuration may be provided statically or dynamically. When the UE 31 is a terminal dedicated to an AI/ML application and has limited uses, the UE 31 may be pre-configured.

### (2-2. Configuration of Transmission Entity)

Returning to Fig. 8, the transmission entity 10 includes an acquisition section 11, a generator 12, a data transmitter 13, and a request receiver 14. Further, a sensing device (not illustrated) such as an imaging sensor is connected to the transmission entity 10. For example, the sensing device may be provided to the UE 31 when the transmission entity 10 is provided to the UE 31. Alternatively, the sensing device may be provided to the R_AN/AN 32 when the transmission entity 10 is provided to the RAN/AN 32.

The acquisition section 11 acquires original input data generated by a sensing device (not illustrated). For example, the original input data is still-image data or moving-image data when the sensing device is an imaging sensor.

The generator 12 generates, from the original input data, a plurality of pieces of input data with reduced data amounts. When, for example, the original input data is still-image data, a plurality of still-image data with reduced data amounts, that is, for example, a plurality of still-image data with reduced resolutions, is generated from the original still-image data.

When, for example, three pieces of still-image data with reduced resolutions are generated from original still-image data, a first piece of still-image data from among the three pieces of still-image data has a lowest resolution, that is, the first still-image data has a smallest data amount. A second piece of still-image data from among the three pieces of still-image data has a higher resolution than the first piece of still-image data, that is, the second still-image data has a larger data amount than the first still-image data. A third piece of still-image data from among the three pieces of still-image data has a higher resolution than the second piece of still-image data, that is, the third still-image data has a larger data amount than the second still-image data. Note that the third still-image data may be identical to the original still-image data.

The data transmitter 13 sequentially transmits, to the reception entity 20, pieces of input data of a plurality of pieces of input data generated by the generator 12. For example, the pieces of input data of the plurality of pieces of input data are sequentially transmitted from the UE 31 to the cloud server 35 through the cellular network 34 when the transmission entity 10 is provided to the UE 31 and the reception entity 20 is provided to the cloud server 35.

The request receiver 14 receives feedback information from the reception entity 20. For example, the feedback information is received by the UE 31 from the cloud server 35 through the cellular network 34 when the transmission entity 10 is provided to the UE 31 and the reception entity 20 is provided to the cloud server 35.

The data transmitter 13 transmits, to the reception entity 20, a first piece of input data from among the plurality of pieces of input data in the first transmission. When, after the first transmission, the request receiver 14 receives, from the reception entity 20, a request to start transmitting an additional piece of input data from among the plurality of pieces of input data, the data transmitter 13 starts additional transmission. In the additional transmission, the data transmitter 13 sequentially transmits, to the reception entity 20, second and subsequent pieces of input data from among the plurality of pieces of input data. When, during the additional transmission, the request receiver 14 receives, from the reception entity 20, a request to stop transmitting the additional input data, the data transmitter 13 stops the additional transmission.

Note that, after the generation of the first piece of input data, the generator 12 may sequentially generate the second and subsequent pieces of input data after the request receiver 14 receives, from the reception entity 20, a request to start transmitting the additional input data. Alternatively, the generator 12 may generate the plurality of pieces of input data collectively.

### (2-3. Configuration of Reception Entity)

The reception entity 20 includes a data receiver 21, an inference section 22 including a multi-input AI/ML model, an output section 23, a determination section 24, and a request transmitter 25.

The data receiver 21 sequentially receives pieces of input data of a plurality of pieces of input data from the transmission entity 10. For example, the pieces of input data of the plurality of pieces of input data are sequentially received by the cloud server 35 from the UE 31 through the cellular network 34 when the transmission entity 10 is provided to the UE 31 and the reception entity 20 is provided to the cloud server 35.

The inference section 22 includes therein a multi-input AI/ML model, and sequentially inputs the pieces of input data of the plurality of pieces of input data to the AI/ML model to sequentially acquire inference values of a plurality of inference values. When, for example, original input data is still-image data and pieces of input data of a plurality of pieces of input data are pieces of still-image data of different resolutions, the AI/ML model is, for example, a single convolutional neural network (CNN) model that classifies objects appearing in a still image. Here, when the number of pixels differs depending on the resolution of each piece of still-image data, there is a need to perform preprocessing of adjustment such that the number of pixels of each piece of still-image data is equal to the number of input neurons of the CNN model, that is, for example, there is a need to apply, for example, a scaling function described later. Alternatively, the inference section 22 may include a plurality of CNN models of different numbers of input neurons for the respective numbers of pixels of respective pieces of still-image data.

The output section 23 sequentially updates inference results on the basis of the inference values of the plurality of inference values acquired by the inference section 22 to output the updated inference results. The output section 23 compares the inference results, and selects the inference result with a highest degree of inference accuracy to set the selected inference result as a final inference result (hard-combining), or the output section 23 sequentially updates inference results by updating a previously obtained inference result with an inference result obtained afterward to obtain a final inference result (soft-combining).

The determination section 24 determines whether there is a need for an additional piece of input data from among the plurality of pieces of input data. For example, the determination section 24 determines whether there is a need for the additional input data, on the basis of the accuracy of a current inference result. When, for example, the accuracy of the current estimation result is greater than or equal to a certain specified threshold, that is, when, for example, a largest probability value output from a softmax function is greater than or equal to another specified threshold, the determination section 24 determines that there is no longer need to update the inference result, and determines that there is no need for the additional input data. On the other hand, when the accuracy of the current inference result is less than the certain specified threshold, that is, when, for example, the largest probability value output from the softmax function is less than the other specified threshold, the determination section 24 determines that there is further a need to update the inference result, and determines that there is a need for the additional input data.

The request transmitter 25 transmits feedback information to the transmission entity 10. For example, the feedback information is transmitted from the cloud server 35 to the UE 31 through the cellular network 34 when the transmission entity 10 is provided to the UE 31 and the reception entity 20 is provided to the cloud server 35.

The data receiver 21 receives, from the transmission entity 10, a first piece of input data from among the plurality of pieces of input data in the first reception. When the determination section 24 determines, after the first reception, that there is a need for the additional input data, the request transmitter 25 transmits a request to start transmitting the additional input data to the transmission entity 10. In additional reception, the data receiver 21 sequentially receives, from the transmission entity 10, second and subsequent pieces of input data from among the plurality of pieces of input data. When the determination section 24 determines, during the additional reception, that there is no need for the additional input data, the request transmitter 25 transmits a request to stop transmitting the additional input data to the transmission entity 10.

### <3. Multi-Input AI/ML Model According to Present Disclosure and Input Data>

A configuration of a multi-input AI/ML model according to the present disclosure and various input data input to the AI/ML model are described.

### (3-1. Multi-Input AI/ML Model)

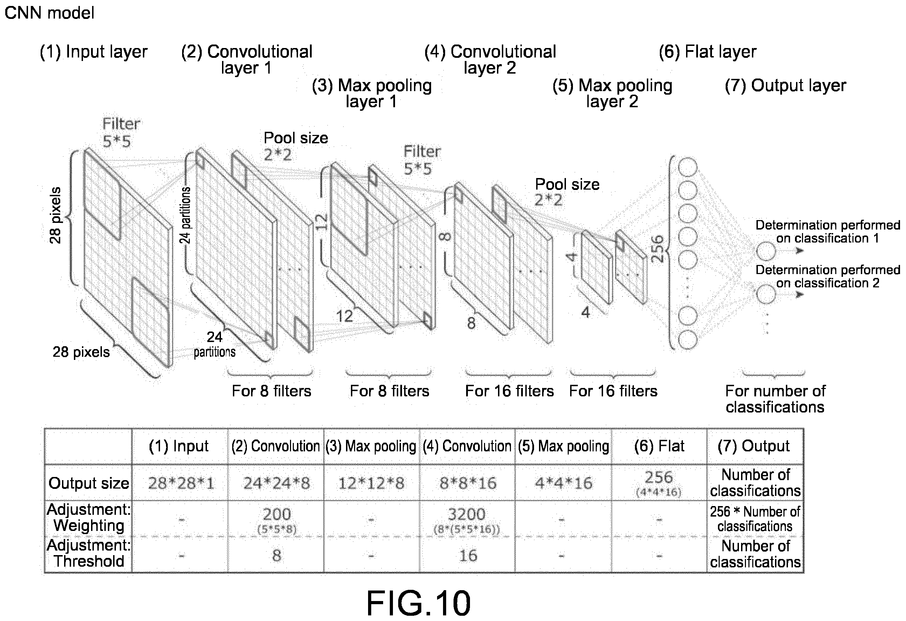

Fig. 10 illustrates a configuration of a convolutional neural network (CNN) model having input of 28 pixels × 28 pixels that is an example of the multi-input AI/ML model. Note that, for example, another AI/ML model that updates an inference result by performing, using a recurrent neural network model, additional input to a neural network model in which inference has been completed, may also be used.

### (3-2. Method for Generating Input Data)

Various methods for generating a plurality of pieces of input data from original input data are described.

### (3-2-1. Generation of Input Data That is Performed on Basis of Resolution of Still Image)

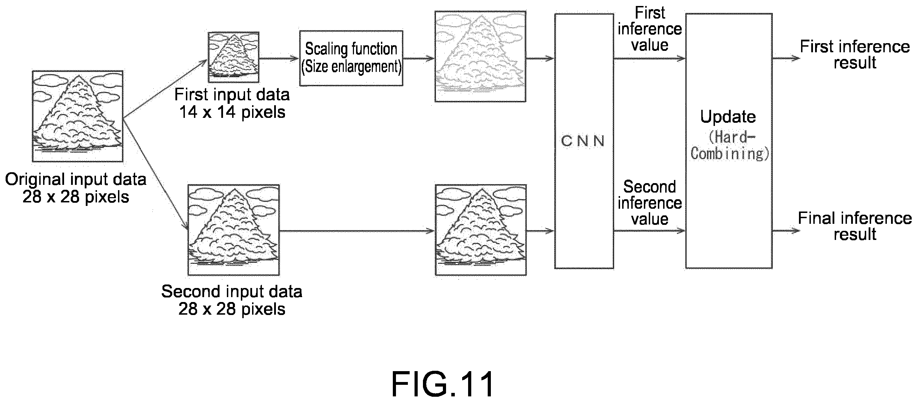

Fig. 11 illustrates an example of inputting two pieces of still-image data of different resolutions to the CNN model illustrated in Fig. 10. First input data and second input data are generated from original input data, the first input data having a resolution reduced by reducing the number of pixels, the second input data having a higher resolution than the first input data. Note that, here, the second input data has a resolution identical to the resolution of the original input data.

A scaling function that performs size enlargement is applied to the first input data before the first input data is input to the CNN model. A first inference value is acquired on the basis of the first input data and set to be a first inference result. Thereafter, a second inference value is acquired on the basis of the second input data. Finally, the first inference result is updated on the basis of the first inference value and the second inference value. For example, hard-combining with which the first inference value and the second inference value are compared and one of the first inference value and the second inference value that exhibits a higher degree of accuracy is set to be an inference result, is performed, and a final inference result is output.

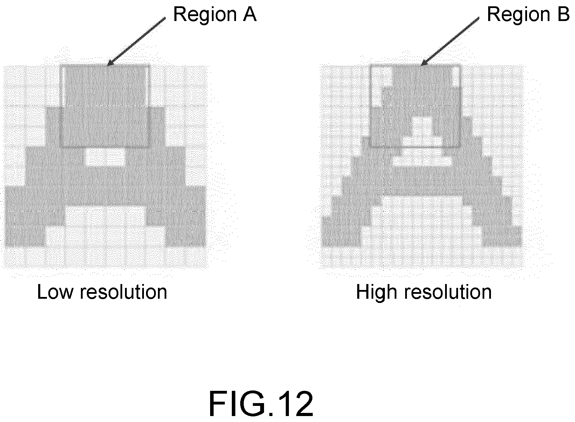

Fig. 12 illustrates three methods for generating two pieces of input data of different resolutions from original still-image data.

First method: Low-resolution data (on the left in the figure) is generated as first input data, and high-resolution data (on the right in the figure) is generated as second input data.

Method 2: A portion of low-resolution data (a region A on the left in the figure) is generated as first input data, and a portion of high-resolution data (a region B on the right in the figure) is generated as second input data.

Method 3: A portion of low-resolution data (the region A on the left in the figure) is generated as first input data, and a portion of low-resolution data (the region A on the left in the figure) and a portion of high-resolution data (the region B on the right in the figure) are generated as second input data.

### (3-2-2. Generation of Input Data That is Performed on Basis of Region in Still Image)

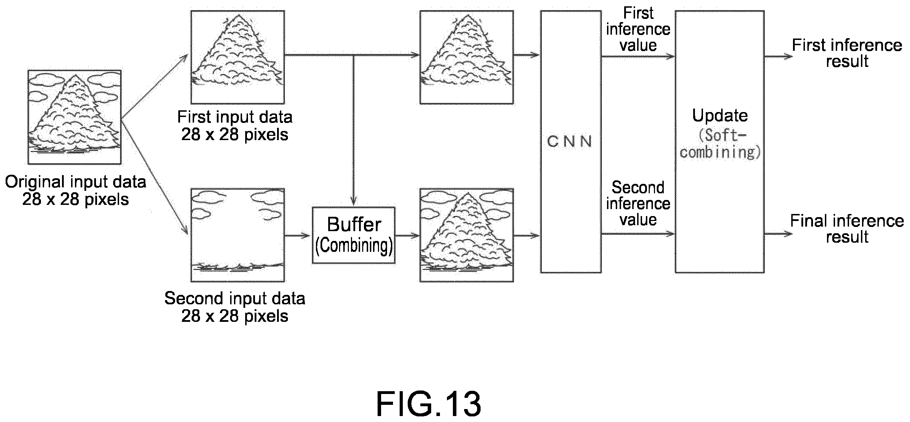

Fig. 13 illustrates an example of inputting two pieces of still-image data of different regions to the CNN model illustrated in Fig. 10. First input data and second input data are generated from original input data, the first input data only including a region situated around a center portion of an image, the second input data only including a region situated around a peripheral edge of the image. A first inference value is acquired on the basis of the first input data and set to be a first inference result. Next, the first input data and the second input data are combined, and a second inference value is acquired using, as new second input data, input data obtained by the combining. Finally, the first inference result is updated on the basis of the first inference value and the second inference value. For example, soft-combining with which a latest one of the first inference value and the second inference value is set to be an inference result is performed, and a final inference result is output.

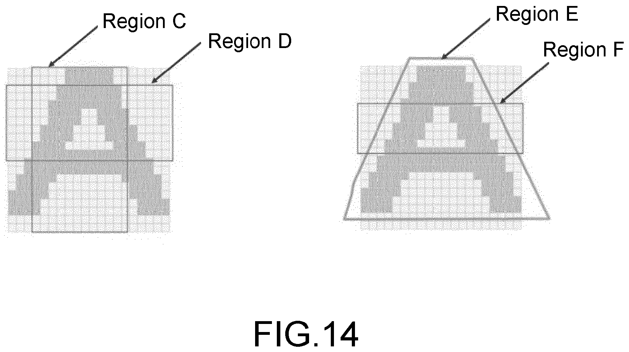

Fig. 14 illustrates two methods for generating two pieces of input data of different regions from original still-image data.

Method 1: Data of a certain region (a region C on the left in the figure) is generated as first input data, and data of a region that does not include the certain region of the first input data is generated as second input data, or data of a region (a region D on the left in the figure) that includes the certain region of the first input data is generated as the second input data. Here, the regions of the respective pieces of input data may be determined on the side of the transmission entity 10, or the regions of the respective pieces of input data may be determined on the side of the reception entity 20 and reported to the transmission entity 10. Further, the regions of the respective pieces of input data may be determined statically in advance, or may be determined quasi-statically.

Method 2: Only data of an important region (a region E on the right in the figure) is generated as first input data, and data of a region that does not include the region of the first input data is generated as second input data, or data of a region (a region F on the right in the figure) that includes the region of the first input data is generated as the second input data. Here, the important region may be determined on the side of the transmission entity 10, or the important region may be determined on the side of the reception entity 20 and reported to the transmission entity 10. The important region may be determined dynamically on the basis of a feature amount. For example, the important region may be determined on the basis of a feature amount extracted using an algorithm such as a filter method, a wrapper method, or an embedded method. Further, the important region may be determined by a sensing device that includes AI/ML functions and is connected to the transmission entity 10.

### (3-2-3. Generation of Input Data That is Performed on Basis of Resolution of and Region in Still Image)

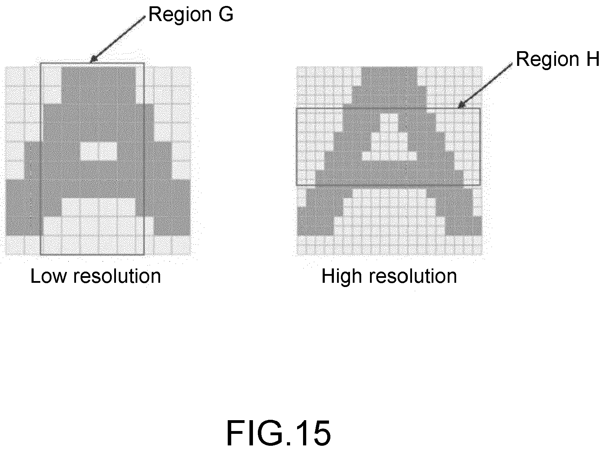

Fig. 15 illustrates an example of a method for generating two pieces of input data of different regions and different resolutions from original still-image data. Moreover, the resolution-based methods in "2-2-1" described above and the region-based methods in "3-2-2" described above may be combined discretionarily when pieces of input data of different regions and different resolutions are generated from original input data.

### (3-2-4. Generation of Input Data That is Performed on Basis of Frame Rate for Moving Image)

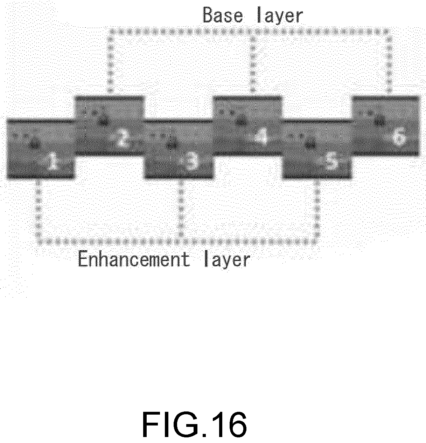

Fig. 16 illustrates two methods for generating two pieces of input data of different frame rates (frame per second: FPS) from original moving-image data.

Method 1: Data that only includes a portion of frames (a base layer in the figure) is generated as first input data, and data that includes the remaining frames (an enhancement layer in the figure) corresponding to frames that are not the frames of the first input data, that is, data that includes frames orthogonal to the frames of the first input data, is generated as second input data.

Method 2: Data that only includes a portion of frames (the base layer in the figure) is generated as first input data, and data that includes all of the frames (the base layer and the enhancement layer in the figure) including the frames of the first input data is generated as second input data.

### (3-2-5. Generation of Input Data That is Performed on Basis of Compression Encoding Performed on Image)

Three methods used when a plurality of data sets is generated from original still-image data or original moving-image data in the process of compression encoding and the plurality of data sets is used as pieces of input data, are described.

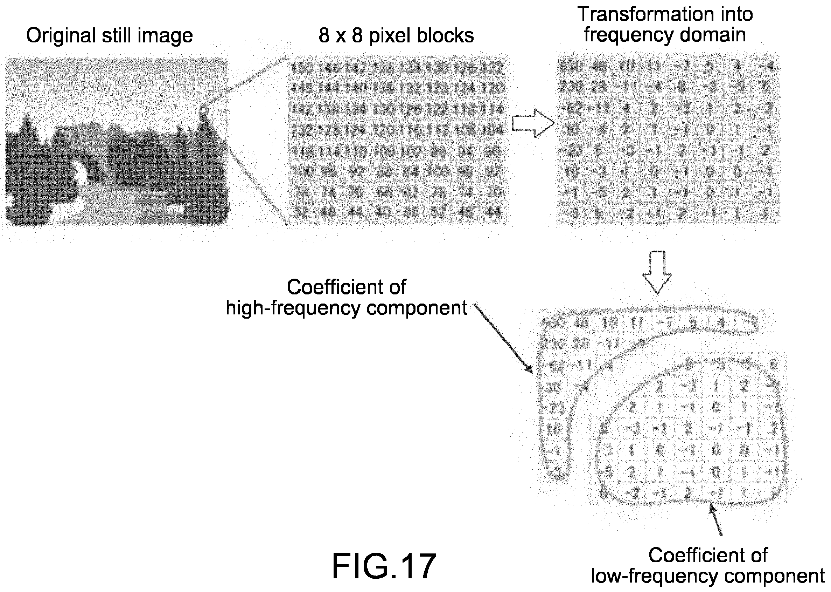

Method 1: Original still-image data is transformed into a frequency domain using a discrete cosine transform (DCT) in JPEG compression encoding, coefficients of a low-frequency component are set to be first input data, and coefficients of a high-frequency component are set to be second input data (Fig. 17).

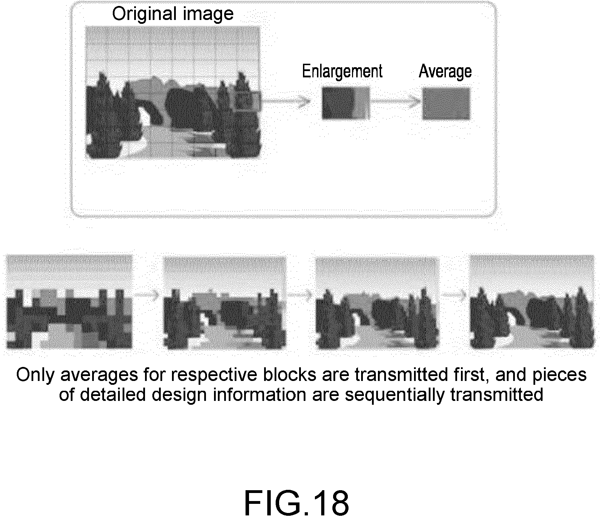

Method 2: In a JPEG progressive scheme, averages of respective blocks are set to be first input data, and pieces of detailed design information are set to be second or subsequent input data (Fig. 18). There may be the second and subsequent pieces of input data.

Method 3: Upon compressing a moving image, the moving image is divided into a portion in which there is a great change in video, and a portion in which there is a small change in video. The portion in which there is a great change in video is set to be first input data, and the portion in which there is a small change in video is set to be second input data.

### (3-2-6. Generation of Input Data That is Performed on Basis of Error Correction Code)

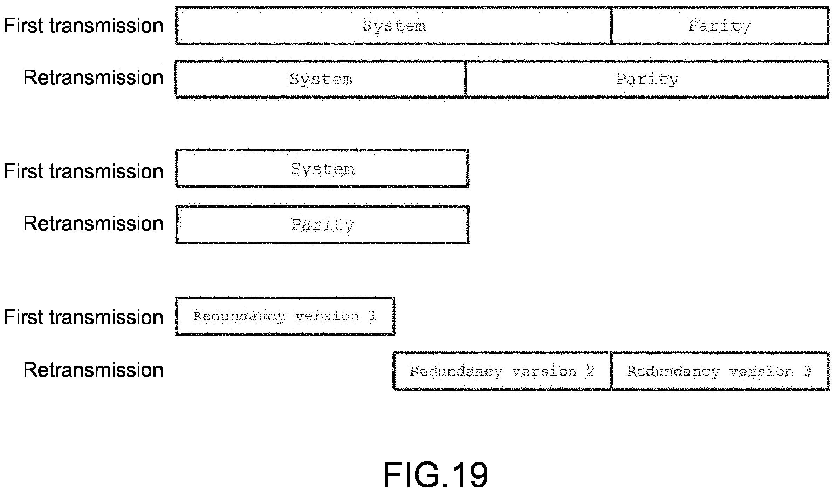

Fig. 19 illustrates three methods in which, upon performing packet communication using an error correction code, first transmission data is set to be first input data and retransmission data is set to be second or subsequent input data.

Method 1: Different proportions of system information to parity information are used for first transmission data and retransmission data (in an upper portion in the figure).

Method 2: System information is transmitted as first transmission data, and parity information is transmitted as retransmission data (in a middle portion in the figure).

Method 3: A mixture of system information and parity information is divided into blocks, and each of the blocks is assigned to first transmission data or retransmission data (in a lower portion in the figure). Here, each of the blocks obtained by the division may be numbered in the form of a redundancy version.

### (3-2-7. Generation of Input Data That is Performed on Basis of Split of AI/ML Model)

The processing of generating a plurality of pieces of input data from original input data may be performed on intermediate layer data generated by an AI/ML model being split. In this case, the intermediate layer data is original input data, and only specific data is extracted from the intermediate layer data to generate a plurality of pieces of input data. Here, limitations on data amounts of respective pieces of input data may be set in advance. Further, data compression may be performed after only the specific data is extracted from the intermediate layer data.

### <4. Details of Various Kinds of Movements According to Present Disclosure>

Details of various kinds of movements according to the present disclosure are described.

### (4-1. Timing of Switching Method for Transmitting Input Data)

When there is room for a performance in a communication link between the transmission entity 10 and the reception entity 20, the transmission entity 10 may transmit original input data acquired by the transmission entity 10 to the reception entity 20 with no change (single transmission). When, for example, there is a reduction in communication performance during single transmission due to, for example, bandwidth limitations of the communication link, the transmission entity 10 generates a plurality of pieces of input data with reduced data amounts from original input data, and sequentially transmits pieces of input data of the plurality of pieces of input data to the reception entity 20, as described above (multi-transmission).

For example, the following are conceivable conditions adopted when the transmission entity 10 switches the method for transmitting input data from single transmission to multi-transmission. Further, here, the transmission entity 10 reports to the reception entity 20 that the transmission method is switched from single transmission to multi-transmission.

Condition 1: When an instruction to perform switching to multi-transmission is received from the RAN/AN 32 in a state in which the transmission entity 10 is provided to the UE 31.

Condition 2: When an application request to instruct switching to multi-transmission is received from an AI/ML application.

Condition 3: When a change or variation in communication performance is reported by the RAN/AN 32 in a state in which the transmission entity 10 is provided to the UE 31, and when it is determined that it is difficult to keep single transmission with a communication performance after the change or variation. Here, examples of information used to elicit communication performance include information regarding, for example, RSRP / RSRQ / RSSI, delay information, delay-budget information, information regarding throughput, and information regarding an allocated wireless communication resource.

Condition 4: When the transmission entity 10 measures a communication performance and when it is determined that it is difficult to keep single transmission with the measured communication performance.

### (4-2. Hard-combining)

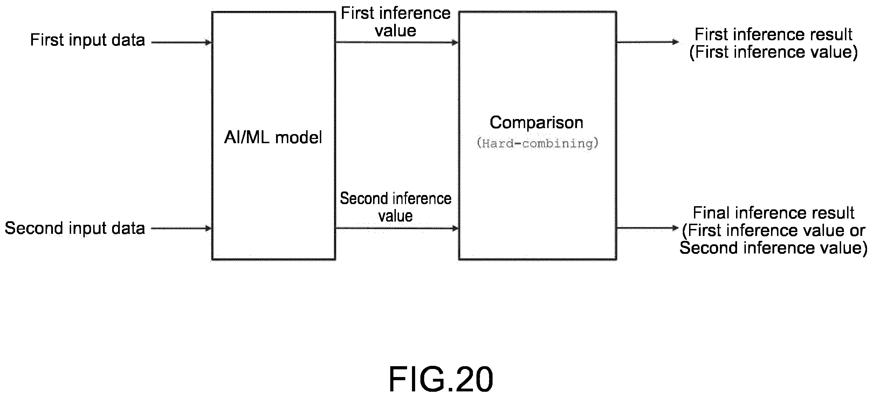

Fig. 20 is a diagram used to describe an example in which two pieces of input data are used for hard-combining performed by the output section 23 of the reception entity 20.

In hard-combining, first, a first inference value based on first input data is acquired and set to be a first inference result. Next, a second inference value based on second input data is acquired. The second inference value and the first inference value are compared, and one of the inference values that exhibits a higher degree of inference accuracy is set to be a final inference result.

In, for example, a case of using a robot, the presence of an obstacle is recognized on the basis of a first inference result, and movement to avoid the obstacle is started as initial movement. Thereafter, the obstacle is recognized as being another moving robot, on the basis of a final inference result, and a course of the movement for avoidance is corrected in order to secure a sufficient distance to the other robot.

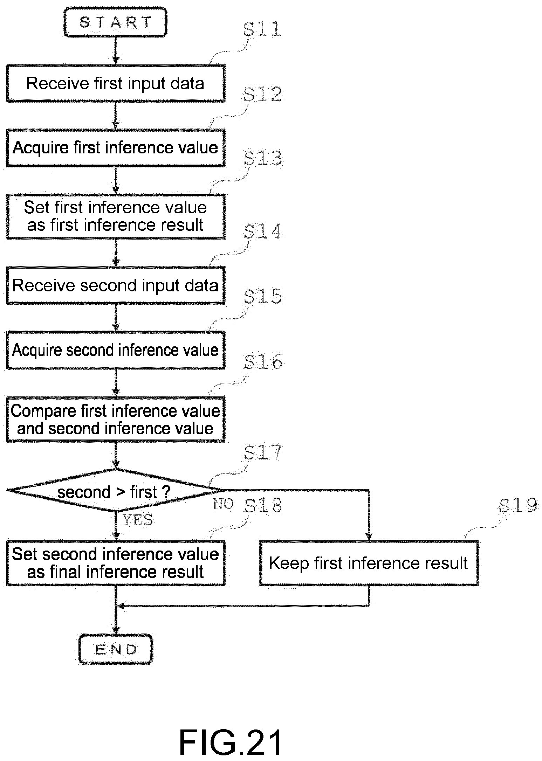

Fig. 21 is a flowchart used to describe details of an operation performed upon hard-combining performed in the above-described case of using a robot. First, first input data is received (S11), a first inference value is acquired on the basis of the first input data (S12), and the first inference value is set to be a first inference result (S13). Next, second input data is received (S14), a second inference value is acquired on the basis of the second input data (S15), and the first inference value and the second inference value are compared (S16).

When the second inference value is more accurate than the first inference value, the second inference value is determined to be true (S17 = YES), and the second inference value is set to be a final inference result (S18). On the other hand, when the second inference value is less accurate than the first inference value, the first inference value is determined to be true (S17 = NO), and the first inference result is kept (S19).

### (4-3. Soft-combining)

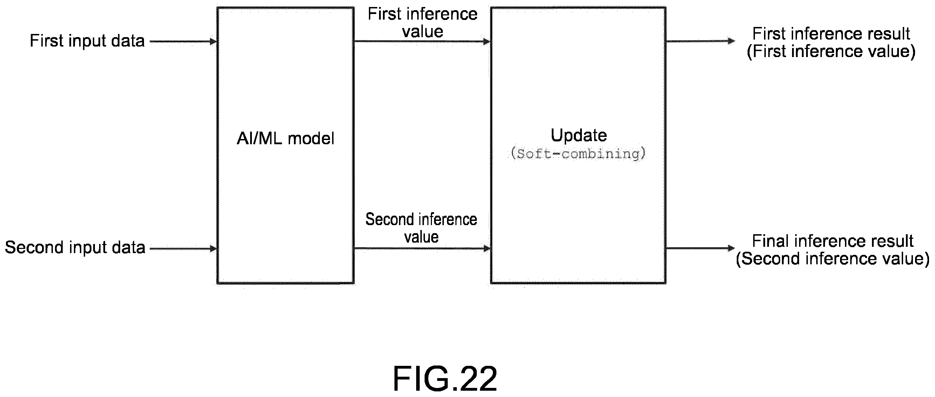

Fig. 22 is a diagram used to describe an example in which two pieces of input data are used for soft-combining performed by the output section 23 of the reception entity 20.

In soft-combining, first, a first inference value based on first input data is acquired and set to be a first inference result. Next, a second inference value based on second input data is acquired and set to be a final inference result. Here, the second input data may include a portion of or all of the first input data. Alternatively, the first input data and the second input data may be combined, and the second inference value may be acquired on the basis of data obtained by the combining and used as new second input data.

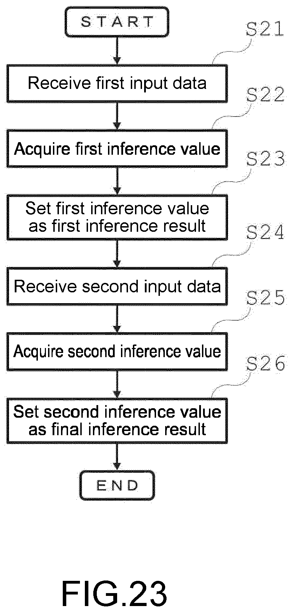

Fig. 23 is a flowchart used to describe details of an operation performed upon soft-combining performed in the above-described case of using a robot. First, first input data is received (S21), a first inference value is acquired on the basis of the first input data (S22), and the first inference value is set to be a first inference result (S23). Next, second input data is received (S24), a second inference value is acquired on the basis of the second input data (S25), and the second inference value is set to be a final inference result (S26).

### (4-4. Request to Start Transmitting Additional Input Data)

When the determination section 24 determines that there is a need for additional input data, the request transmitter 25 of the reception entity 20 transmits a request to start transmitting additional input data as feedback information addressed to the transmission entity 10. For example, the following are conceivable conditions adopted when it is determined that there is a need for additional input data.

Condition 1: When a degree of accuracy of a first inference result (an inference accuracy) is less than a specified threshold. A request to start transmitting additional input data is transmitted when a degree of accuracy of a first inference result obtained on the basis of first input data does not reach a desired degree of accuracy, as illustrated in Fig. 22. Note that, for example, a signal-to-noise ratio (SNR), a peak signal-to-noise ratio (PSNR), or a structural simirarity (SSIM) may be used as an indicator for an inference accuracy, in addition to the above-described largest probability value output from a softmax function. Note that all of or a portion of an original image may be regularly reported as reference information in order to calculate the inference accuracy. This results in transmitting a request to start transmitting additional input data until next reference information is received when, for example, the degree of inference accuracy does not reach a desired degree of accuracy.

Condition 2: When a delay until a first inference result is obtained (an inference delay) is less than a specified threshold. A request to start transmitting additional input data is transmitted when there is a sufficient period of time from the transmission entity 10 transmitting first input data to the reception entity 20 obtaining a first inference result.

### (4-5. Request to Stop Transmitting Additional Input Data)

When the determination section 24 determines that there is no need for additional input data, the request transmitter 25 of the reception entity 20 transmits a request to start transmitting additional input data as feedback information addressed to the transmission entity 10. For example, the following are conceivable conditions adopted when it is determined that there is no need for additional input data.

Condition 1: When a degree of accuracy of an inference result (an inference accuracy) is greater than or equal to a specified threshold. A request to stop transmitting additional input data is transmitted when a degree of accuracy of a current inference result reaches a desired degree of accuracy. The threshold used in this case may be different from the threshold used for the above-described request to start the transmission.

Condition 2: When a delay until an inference result is obtained (an inference delay) is greater than or equal to a specified threshold. A request to stop transmitting additional input data is transmitted when there is not a sufficient period of time from the transmission entity 10 transmitting input data to the reception entity 20 obtaining an inference result. The threshold used in this case may be different from the threshold used for the above-described request to start the transmission.

Condition 3: When a difference in degree of accuracy between a current inference result and an immediately precedent inference result (an amount of improvement in inference accuracy) is less than a specified threshold. A request to stop transmitting additional input data is transmitted when it is determined that the improvement in inference accuracy is no longer expected.

Note that the stop of transmission of additional input data may be determined on the side of the transmission entity 10, which is different from Conditions 1 to 3 described above. In, for example, a case of use in XR navigation, it is conceivable that the transmission entity 10 could be provided to goggles worn by a user and could track a viewpoint of the user at all times. In such a use case, transmission of additional input data used for inference about a target object may be stopped when it is determined that the user looks away from the target object. In this case, the transmission entity 10 reports to the reception entity 20 about stop of transmission of additional input data.

### (4-6. How to Provide Feedback Information)

For example, ACK / NACK may be used as a method for providing feedback information transmitted by the request transmitter 25 of the reception entity 20, that is, a request to start transmitting additional input data and a request to stop transmitting additional input data. When, for example, a degree of accuracy of an inference result is greater than or equal to a specified threshold and there is no need for additional input data, ACK is transmitted. On the other hand, when the degree of accuracy of the inference result is less than the specified threshold and there is a need for additional input data, NACK is transmitted.

### (4-7. Associated Information Serving as Feedback Information)

The request transmitter 25 of the reception entity 20 may transmit, for example, associated information as indicated below as feedback information in addition to a request to start transmitting additional input data and a request to stop transmitting additional input data.

Associated information 1: The number of time of transmission of additional input data. For example, whether it is sufficient if additional input data is transmitted once or the additional input data is to be transmitted multiple times may be reported as the associated information.

Associated information 2: Specifications of additional input data. For example, specifications such as a data amount (for example, xx MB) of additional input data, a resolution of the additional input data, a region of the additional input data, a code rate of the additional input data, and a proportion of redundancy data in the additional input data may be specified in the form of associated information. Further, for example, data output from a specific neuron in a neural network model may be specified in the form of associated information.

Associated information 3: Delay of additional input data. For example, delay-budget information indicating that, for example, there is a need to process additional input data within xx milliseconds may be reported in the form of associated information. Further, time specification asking to, for example, transmit additional input data within xx milliseconds may be reported in the form of associated information.

Associated information 4: A gap between a degree of accuracy of a current inference result and a desired degree of inference accuracy. For example, information regarding a gap between a degree of accuracy of a current inference result and a desired degree of inference accuracy may be reported in the form of associated information.

Associated information 5: A degree of priority of additional input data. For example, a degree of priority of additional input data (for example, high, moderate, and low) may be reported in the form of associated information. The transmission entity 10 compares a degree of priority of requested additional input data with a degree of priority of additional input data requested by another user, and determines which of the requests made by the respective users is to be prioritized.

### (4-8. Change in Additional Input Data That is Performed on Basis of Associated Information)

On the basis of the above-described associated information received from the reception entity 20, the transmission entity 10 may change a method for generating additional input data or a method for transmitting the additional input data. For example, the following are conceivable change examples.

Change Example 1: A timing of generating additional input data is changed. For example, the generator 12 of the transmission entity 10 may generate pieces of additional input data in advance before a request to start transmitting additional input data is received from the reception entity 20. Alternatively, the generator 12 of the transmission entity 10 may sequentially generate the pieces of additional input data at a timing at which the request to start the transmission is received. When the pieces of additional input data are generated in advance, the transmission entity 10 may report version information regarding a version of additional input data to the reception entity 20 in advance.

Change Example 2: A resolution of additional input data is changed. For example, the generator 12 of the transmission entity 10 may change a resolution of additional input data. Alternatively, the generator 12 of the transmission entity 10 may change the resolution of additional input data for each region. Alternatively, the generator 12 of the transmission entity 10 may change the resolution of additional input data to a resolution at which no additional input data has been generated.

Change Example **3:** A region of additional input data is changed. For example, the generator 12 of the transmission entity 10 may change a region of additional input data. Alternatively, the generator 12 of the transmission entity 10 may generate pieces of input data in advance by dividing original input data into regions, and may select input data of a region to transmit the selected input data. Alternatively, the generator 12 of the transmission entity 10 may change the region of additional input data to a region of which no input data has been generated.

Change Example **3:** Transmission of encoding information regarding encoding of additional input data. For example, the data transmitter 12 of the transmission entity 10 may retransmit system information regarding already transmitted additional input data. Alternatively, the data transmitter 12 of the transmission entity 10 additionally transmits parity information regarding already transmitted additional input data.

### <5. Functionality Expansion of Cellular Network According to Present Disclosure>

In the present disclosure, there is a need to transmit a plurality of different traffics (at different times) in an AI/ML application including a multi-input AI/ML model. For example, there is a need to transmit pieces of input data of different resolutions using different flows.

### (5-1. Network Slice for 5G System)

A 5G system makes it possible to provide communication that supports the multi-input AI/ML model described above in the form of a network slice. When an AI/ML application is activated, the UE selects a network slice that provides communication that supports a multi-input AI/ML model, and performs processing of requesting establishment of a protocol data unit (PDU) session that corresponds to the selected network slice.

S-NSSAI is assigned to each network slice as information (network slice selection assistance information) that is used to assist in selecting a network slice, and a network slice is identified by S-NSSAI. S-NSSAI includes a pair of a mandatory slice/service type (SST) that includes 8 bits used to identify a slice type, and an optional slice differentiator (SD) that includes 24 bits used to distinguish different slices in a single SST.

The core network can select a network function (NF) necessary to provide a PDU session corresponding to a network slice, on the basis of S-NSSAI. For example, the Access and Mobility Management Function (AMF) receiving a message that makes a request to establish a PDU session selects one of a plurality of candidates of Session Management Function (SMF) on the basis of S-NSSAI. The selected SMF selects one of a plurality of candidates of a user plane function (UPF) on the basis of S-NSSAI. Here, the UPF is a network function that processes user plane data of a PDU session.

When an AI/ML application is executed, the UE selects a data network name (DNN) that is connected to the cloud server 35 providing the AI/ML application. The above-described message making a request to establish a PDU session includes a DNN and S-NSSAI. Further, an established PDU session is associated with a DNN and S-NSSAI.

### (5-2. QoS Control for 5G System)

At the non-access stratum (NAS) level, the QoS flow is the finest granularity upon distinguishing different kinds of QoS in a PDU session. The QoS flow is identified by a QoS flow ID (QFI) in the PDU session. The RAN/AN can establish at least one data radio bearer (DRB) between the RAN/AN and each piece of UE together with the PDU session. The DRB is a logical path used to transmit data. A 5G QoS model supports a guaranteed flow bit rate (GBR) with bandwidth guarantees, and a non-guaranteed flow bit rate (Non-GBR) with no bandwidth guarantees.

The RAN/AN and the core network assure the service quality by mapping each packet to an appropriate QoS flow and an appropriate DRB. In other words, two-step mapping including mapping of an IP flow to a QoS flow in a NAS and mapping of the QoS flow to a DRB in an access stratum (AS) is performed.

At the NAS level, the QoS flow is characterized by a QoS profile and a QoS rule, the QoS profile being provided by the core network 33 to the RAN/AN, the QoS rule being provided by the core network to the UE. The QoS profile is used by the RAN/AN to determine a method for performing processing over a wireless interface. The QoS rule is used to instruct the UE to map user plane traffic to a QoS flow in the uplink.

The QoS profile is provided to the RAN/AN through SMF, AMF, and a reference point N2, or is set in the RAN/AN in advance. Further, through the AMF and a reference point N1, the SMF can provide the UE with at least one QoS rule, and can also provide the UE with a QoS flow level QoS parameter associated with the at least one QoS rule as necessary.

In addition to, or instead of this, reflective QoS control may be applied to the UE. The reflective QoS control is QoS control that monitors QFIs of packets in the downlink and applies the same mapping for packets in the uplink.

The QoS flow is a GBR QoS flow or a Non-GBR QoS flow, depending on its QoS profile. The QoS profile of a QoS flow includes QoS parameters such as a 5G QoS identifier (5QI) and an allocation and retention priority (ARP).

The ARP includes information regarding a priority level, preemption capability, and preemption vulnerability. The priority level defines a relative degree of importance of a QoS flow, and a smallest value of the priority level represents a highest priority. The preemption capability is an indicator that defines whether a certain QoS flow can take resources already allocated to another QoS flow with a lower level of priority. The preemption vulnerability is an indicator that defines whether a certain QoS flow can give, to another QoS flow with a higher level of priority, resources allocated to the certain QoS flow. The preemption capability and the preemption vulnerability are each set to "enabled" or "disabled".

In the GBR QoS flow, the QoS profile includes, for example, guaranteed flow bit rates (GFBRs) in the uplink and in the downlink, maximum flow bit rates (MFBR) in the uplink and in the downlink, maximum packet loss rates in the uplink and in the downlink, a delay critical resource type, and notification control.

In the Non-GBR QoS flow, the QoS profile includes, for example, a reflective QoS attribute (RQA) and additional QoS flow information. The notification control of a QoS parameter indicates whether a request for a report from the RAN/AN is made when a certain QoS flow does not satisfy a GFBR. When, with respect to a certain GBR QoS flow, the notification control is "enabled" and it is determined that the GFBR is not satisfied, the RAN/AN transmits a report about this matter to an SMF.

In this case, the RAN/AN has to keep this QoS flow unless the RAN/AN makes a request to release a RAN resource of this GBR QoS flow, which is a special state such as a state of radio link failure or a state of a RAN internal congestion. Further, when it is determined that the GFBR is satisfied again with respect to this QoS flow, the RAN/AN transmits a new report about this matter to the SMF.

An aggregate maximum bit rate (AMBR) has a relationship with a session-AMBR of each PDU session and a UE-AMBR of corresponding UE. The session-AMBR imposes limitations on an aggregate bit rate expected to be provided to all of the Non-GBR QoS flows with respect to a specific PDU session, and is managed by a UPF. The UE-AMBR imposes limitations on an aggregate bit rate expected to be provided to all of the Non-GBR QoS flows with respect to certain UE, and is managed by the RAN/AN.

The 5QI is related to QoS features, and provides a policy used to set a node-specific parameter for each QoS flow. A 5G QoS feature standardized or set in advance is learned from the 5QI, and is not explicitly signaled. A signaled QoS feature can be included as a portion of a QoS profile.

The QoS features include information regarding, for example, priority, a packet delay budget, a packet error rate, an averaging window, and a maximum data burst volume. The packet delay budget may include a packet delay budget in the core network.

At the AS level, the DRB defines a method for processing a packet over a Uu interface. The DRB provides a single packet forwarding process to any packet.

The RAN/AN maps a QoS flow to a DRB on the basis of a QFI and a QoS profile set for the QFI. The RAN/AN can establish different DRBs for packets that request different packet forwarding processes. Further, the RAN/AN can also multiplex, in a single DRB, a plurality of QoS flows belonging to a single PDU session.

In the uplink, mapping of a QoS flow to a DRB is controlled by one of mapping rules respectively signaled by two different methods. One of the methods is a method that is called reflective mapping. When the reflective mapping is performed, the UE monitors a QFI of a downlink packet and applies the same mapping for an uplink packet with respect to each DRB. Another of the methods is a method called an explicit configuration. When the explicit configuration is performed, a mapping rule of mapping of a QoS flow to a DRB is explicitly signaled by RRC.

In the downlink, a QFI is signaled by the RAN/AN over the Uu interface for the purpose of reflective quality of service (RQoS). Unless reflective mapping is used for a QoS flow carried by a certain DRB, a QFI for the DRB is not signaled by the RAN/AN or NAS over the Uu interface.

In the uplink, the RAN/AN can be set to signal a QFI over the Uu interface toward the UE. Further, a default DRB can be set for each PDU session. When an uplink packet is not adapted to the explicit configuration or the reflective mapping, the UE maps the packet to a default DRB for a PDU session.

The core network may transmit, to the RAN/AN, an additional QoS-flow-information parameter related to any QoS flow, in order to give an instruction to make certain traffic more frequent with respect to a certain Non-GBR QoS flow in a PDU session, compared to other Non-GBR QoS flows in the PDU session.

How to map a plurality of QoS flows in a PDU session to a single DRB is determined by the RAN/AN. For example, the RAN/AN may map a GBR QoS flow and a Non-GBR QoS flow to a single DRB or different DRBs. Further, the RAN/AN may map GBR QoS flows of a plurality of GBR QoS flows to a single DRB or different DRBs.

In 5G NR, a service data adaptation protocol (SDAP) sublayer is newly introduced for QoS control performed through a QoS flow. The SDAP sublayer maps QoS flow traffic to an appropriate DRB. The SDAP sublayer may include a plurality of SDAP entities, and includes an SDAP entity for each PDU session over the Uu interface. The SDAP entity is established or released by RRC.

The QoS flow is identified by a QFI in a PDU session container included in a GTP-U header. The PDU session is identified by a GTP-U tunnel endpoint ID (TEID). The SDAP sublayer maps each QoS flow to a specific DRB.

### (5-3. Multi-QoS Flow Control for 5G System)

In an AI/ML application that includes a multi-input AI/ML model, pieces of input data are input to the AI/ML model, and different QoS flows are respectively mapped for the respective pieces of input data. In other words, different QoS flows that respectively correspond to pieces of input data that are input to the AI/ML model are mapped to a PDU session that processes the pieces of input data. Here, the number of QoS flows mapped to a single PDU session may be included in a message that makes a request for establishment of the PDU session, or may be set for each S-NSSAI in advance.

Through a QoS profile for each QoS flow acquired from the core network, the RAN/AN may determine a 5QI that is applied to the QoS flow. Further, through a QoS rule acquired from the RAN/AN, the UE acquires information regarding mapping of user plane traffic to a QoS flow in the uplink. The UE may determine a QoS flow to which pieces of input data that are input to the AI/ML model are mapped, on the basis of the information regarding the mapping. For each QoS flow, the RAN/AN allocates a radio resource to the UE, that is, performs scheduling.

### <6. Examples>

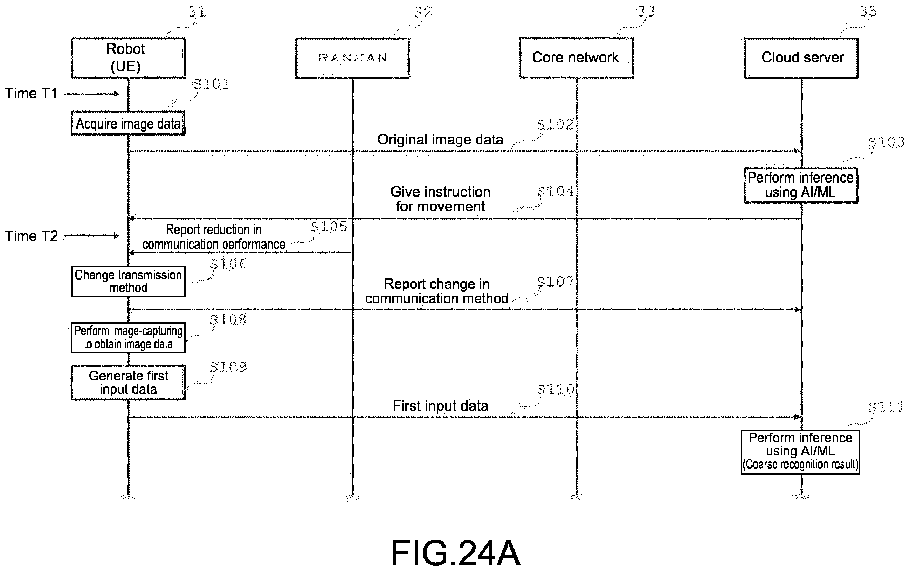

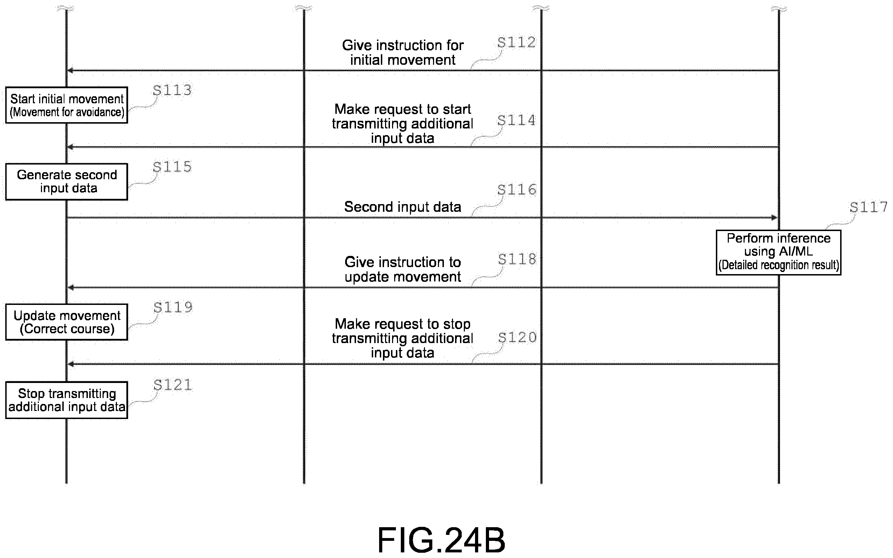

Fig. 24 illustrates a sequence when a robot in a factory performs automated driving while performing image recognition, which is an example of an AI/ML application including an AI/ML model according to the present disclosure. In the example, on the assumption of typical cloud learning, the transmission entity 10 is provided to a robot (UE) 31, and the reception entity 20 is provided to the cloud server 35.

At a time T1 in Fig. 24, there is room for a performance in a communication link between the robot 31 and the cloud server 35. Thus, when the robot 31 acquires original image data (S101), the robot 31 transmits the original image data to the cloud server in single transmission with no change (S102). The cloud server 35 inputs the received image data to a multi-input AI/ML model, and transmits, to the robot 31, an instruction for movement that is given on the basis of an inference result (S104).

At a time T2, there is a rapid reduction in communication performance due to bandwidth limitations of a wireless communication link between the robot 31 and the RAN/AN 32. When the RAN/AN 32 detects the reduction, the RAN/AN 32 reports the reduction in communication performance (a change or a variation) to the robot 31 (S105). When the robot 31 receives the report, the robot 31 changes the method for transmitting image data from single transmission to multi-transmission (S106), and reports the change to the cloud server 35 (S107).

When the robot 31 acquires the original image data (S108), the robot 31 generates first input data with a reduced resolution on the basis of the original image data (S109), and transmits the first input data to the cloud server 35 (S110). When the cloud server 35 receives the first input data, the cloud server 35 inputs the first input data to the multi-input AI/ML model to acquire a first inference result (a coarse recognition result) (S111).

The cloud server 35 transmits an instruction for initial movement to the robot 31 on the basis of the coarse recognition result (S112). For example, movement for avoidance is started on the basis of the coarse recognition result showing that an obstacle is situated ahead of the robot 31. When the robot 31 receives the instruction for initial movement from the cloud server 35, the robot 31 starts the movement for avoidance in accordance with the instruction for initial movement (S113).

Next, the cloud server 35 transmits, to the robot 31, a request to start transmitting additional input data since a degree of accuracy of the first inference result obtained in Step S111 described above is less than a specified threshold (S114). When the robot 31 receives the request, the robot 31 generates second input data having a higher resolution than the first input data (S115), and transmits the second input data to the cloud server 35 (S116). When the cloud server 35 receives the second input data, the cloud server 35 inputs the second input data to the multi-input AI/ML model to acquire a second inference result (a detailed recognition result) (S117).

On the basis of the detailed recognition result, the cloud server 35 transmits, to the robot 31, an instruction to update movement (S118). For example, a course of the movement for avoidance is corrected on the basis of the detailed recognition result showing that the obstacle situated ahead of the robot 31 is a human, in order to secure adequate safety. When the robot 31 receives the instruction to update movement from the cloud server 35, the robot 31 corrects the course of the movement for avoidance in accordance with the instruction to update movement (S119).

Next, the cloud server 35 determines that there is no need for additional input data since a degree of accuracy of the second inference result obtained in Step S117 described above is greater than or equal to the specified threshold, and transmits, to the robot 31, a request to stop transmitting additional input data (S120). When the robot 31 receives the request, the robot 31 stops transmitting additional input data (S121).

### <7. Conclusion>

As described above, the transmission entity 10 according to the present disclosure generates a plurality of pieces of input data with reduced data amounts from original input data. When the transmission entity 10 receives, from the reception entity 20, a request to start transmitting an additional piece of input data from among the plurality of pieces of input data after transmitting a first piece of input data from among the plurality of pieces of input data, the transmission entity 10 starts transmitting the additional piece of input data. When the transmission entity 10 receives a request to stop transmitting the additional piece of input data from the reception entity 20, the transmission entity 10 stops transmitting the additional piece of input data.

The reception entity 20 sequentially inputs, to a multi-input AI/ML model, pieces of input data of a plurality of pieces of input data received from the transmission entity 10 to sequentially update inference results. When there is a need for additional input data, the reception entity 20 transmits, to the transmission entity 10, a request to start transmitting the additional input data. Then, when there is no need for the additional input data, the reception entity 20 transmits, to the transmission entity 10, a request to stop transmitting the additional input data.

According to the characteristics described above, the transmission entity 10 and reception entity 20 according to the present disclosure make it possible to provide an AI/ML application that updates an inference result in stages until a desired result is obtained. In, for example, an environment in which there is a great change in a performance in wireless communication link, an inference result can also be updated in stages until an inference result with a desired degree of accuracy is obtained.

Note that the technology according to the present disclosure is not limited to a specific standard, and any modifications may be made to the illustrated settings as appropriate. Note that the examples described above are examples used to embody the present disclosure, and the present disclosure may be embodied in a variety of other embodiments. For example, various modifications, replacements, omissions, or combinations may be applied without departing from the scope of the present disclosure. Embodiments obtained by applying, for example, such modifications, replacements, omissions, or combinations are also included in the scope of the present disclosure, as well as the scope of embodiments of the present disclosure and their equivalents.

Further, the processing procedures described in the present disclosure may be considered a method including a series of the procedures. Alternatively, the processing procedures described in the present disclosure may be considered a program used to cause a computer to perform the series of the procedures, or a recording medium that has stored therein the program. Further, the processing described above is performed by a processor such as a CPU of a computer. Further, the type of the recording medium is not particularly limited since the examples of the present disclosure are not affected by the type of the recording medium.

Note that the illustrated structural elements of the present disclosure may be provided by software or may be implemented by hardware. For example, each structural element may be a software module provided by software such as a microprogram, and may be provided by a processor executing the software module. Alternatively, each structural element may be implemented by a circuit block on a semiconductor chip (a die), that is, for example, an integrated circuit such as an application specific integrated circuit (ASIC) or a field programmable gate array (FPGA). Further, the number of structural elements does not necessarily have to be equal to the number of pieces of hardware by which the structural elements are implemented. For example, a plurality of structural elements may be implemented by a single processor or circuit. Conversely, a single structural element may be implemented by a plurality of processors or circuits.

Note that the type of the processor described in the present disclosure is not limited. For example, the processor may be a CPU, a micro processing unit (MPU), or a graphics processing unit (GPU).

### Reference Signs List

- 10: transmission entity
- 11: acquisition section
- 12: generator
- 13: data transmitter
- 14: request receiver
- 20: reception entity
- 21: data receiver
- 22: inference section
- 23: output section
- 24: determination section
- 25: request transmitter
- 31: UE (terminal apparatus)
- 32: RAN/AN
- 33: core network
- 34: cellular network
- 35: cloud server (server apparatus)

## Claims

1. A transmission entity (10) used for an AI/ML application, the transmission entity (10) comprising:
an acquisition section (11) that acquires original input data;
a generator (12) that generates, from the original input data, a plurality of pieces of input data with reduced data amounts;
a data transmitter (13) that sequentially transmits pieces of input data of the plurality of pieces of input data; and
a request receiver (14) that receives feedback information based on whether there is a need for an additional piece of input data from among the plurality of pieces of input data,
wherein when the request receiver (14) receives a request to start transmitting the additional piece of input data after the data transmitter (13) transmits a first piece of input data from among the plurality of pieces of input data, the data transmitter (13) starts transmitting the additional piece of input data, and
when the request receiver (14) receives a request to stop transmitting the additional piece of input data, the data transmitter (13) stops transmitting the additional piece of input data.

2. The transmission entity (10) according to claim 1, wherein
when the request receiver (14) receives the request to start transmitting the additional piece of input data after the generator (12) generates the first piece of input data, the generator (12) sequentially generates the additional pieces of input data.

3. The transmission entity (10) according to claim 1, wherein
the original input data is still-image data, and
the plurality of pieces of input data is pieces of still-image data of different resolutions.

4. The transmission entity (10) according to claim 1, wherein
the original input data is still-image data, and
the plurality of pieces of input data is pieces of still-image data of partially or completely different regions.

5. The transmission entity (10) according to claim 1, wherein
the transmission entity (10) is provided to a terminal apparatus that is connected to a cellular network.

6. The transmission entity (10) according to claim 1, wherein
the transmission entity (10) is provided to a cellular network and a terminal apparatus in a distributed manner, the terminal apparatus being connected to the cellular network.

7. A reception entity (20) used for an AI/ML application, the reception entity (20) comprising:
a data receiver (21) that sequentially receives pieces of input data of a plurality of pieces of input data;
an inference section (22) that sequentially inputs the pieces of input data of the plurality of pieces of input data to a multi-input AI/ML model to sequentially acquire inference values of a plurality of inference values;
an output section (23) that sequentially updates inference results on a basis of the respective inference values of the plurality of inference values to output the updated inference results;
a determination section (24) that determines whether there is a need for an additional piece of input data from among the plurality of pieces of input data; and
a request transmitter (25) that transmits feedback information on a basis of the determination of whether there is a need for the additional piece of input data, the determination being performed by the determination section (24),
wherein when the determination section (24) determines that there is a need for the additional piece of input data, the request transmitter (25) transmits, to the transmission entity (10), a request to start transmitting the additional piece of input data, and
when the determination section (24) determines, after the transmission of the request to start transmitting the additional piece of input data, that there is no need for the additional piece of input data, the request transmitter (25) transmits, to the transmission entity (10), a request to stop transmitting the additional piece of input data.

8. The reception entity (20) according to claim 7, wherein
the determination section (24) determines whether there is a need for the additional piece of input data on a basis of a degree of accuracy of the inference result.

9. The reception entity (20) according to claim 7, wherein
the determination section (24) determines whether there is a need for the additional piece of input data on a basis of a delay caused until the inference result is obtained.

10. The reception entity (20) according to claim 7, wherein
the determination section (24) determines whether there is a need for the additional piece of input data on a basis of a difference in degree of accuracy between a current inference result and an immediately precedent inference result.

11. The reception entity (20) according to claim 7, wherein
the output section (23) outputs the inference result on a basis of comparison of the plurality of inference values.

12. The reception entity (20) according to claim 7, wherein
the output section (23) sets a latest one of the plurality of inference values as the inference result; or
the reception entity (20) is provided to a server apparatus that is connected to a cellular network; or
the reception entity (20) is provided to a cellular network and a server apparatus in a distributed manner, the server apparatus being connected to the cellular network.

13. A data transmission method used for an AI/ML application, the data transmission method comprising:
acquiring original input data;
generating, from the original input data, a plurality of pieces of input data with reduced data amounts;
sequentially transmitting pieces of input data of the plurality of pieces of input data; and
receiving feedback information based on whether there is a need for an additional piece of input data from among the plurality of pieces of input data,
wherein when a request to start transmitting the additional piece of input data is received after a first piece of input data from among the plurality of pieces of input data has been transmitted, starting to transmit the additional piece of input data, and
when a request to stop transmitting the additional piece of input data is received, stopping transmitting the additional piece of input data.

## Patentansprüche

1. Sendungsinstanz (10), die für eine KI/ML-Anwendung verwendet wird, die Sendungsinstanz (10) umfassend:
einen Erfassungsabschnitt (11), der ursprüngliche Eingabedaten erfasst;
einen Generator (12), der, aus den ursprünglichen Eingabedaten, eine Vielzahl von Eingabedatenelementen mit reduzierten Datenmengen generiert;
einen Datensender (13), der Eingangsdatenelemente der Vielzahl von Eingangsdatenelementen sequenziell sendet; und
einen Anforderungsempfänger (14), der Rückmeldeinformationen basierend darauf empfängt, ob ein Bedarf an einem zusätzlichen Eingabedatenelement aus der Vielzahl von Eingabedatenelementen besteht,
wobei, wenn der Anforderungsempfänger (14) eine Anforderung empfängt, das Senden des zusätzlichen Eingabedatenelements zu starten, nachdem der Datensender (13) ein erstes Eingabedatenelement aus der Vielzahl von Eingabedatenelementen sendet, der Datensender (13) das Senden des zusätzlichen Eingabedatenelements startet, und
wenn der Anforderungsempfänger (14) eine Anforderung empfängt, das Senden des zusätzlichen Eingabedatenelements zu beenden, der Datensender (13) das Senden des zusätzlichen Eingabedatenelements beendet.

2. Sendungsinstanz (10) nach Anspruch 1, wobei
wenn der Anforderungsempfänger (14) die Anforderung empfängt, das Senden des zusätzlichen Eingabedatenelements zu starten, nachdem der Generator (12) das erste Eingabedatenelement generiert hat, der Generator (12) sequenziell die zusätzlichen Eingabedatenelemente generiert.

3. Sendungsinstanz (10) nach Anspruch 1, wobei
die ursprünglichen Eingangsdaten Standbilddaten sind, und
die Vielzahl von Eingabedatenelementen Standbilddatenelemente mit unterschiedlichen Auflösungen ist.

4. Sendungsinstanz (10) nach Anspruch 1, wobei
die ursprünglichen Eingangsdaten Standbilddaten sind, und
die Vielzahl von Eingabedatenelementen Standbilddatenelemente von teilweise oder vollständig unterschiedlichen Bereichen ist.

5. Sendungsinstanz (10) nach Anspruch 1, wobei
die Sendungsinstanz (10) einer Endgeräteeinrichtung bereitgestellt wird, die mit einem Mobilfunknetz verbunden ist.

6. Sendungsinstanz (10) nach Anspruch 1, wobei
die Sendungsinstanz (10) einem Mobilfunknetz und einer Endgeräteeinrichtung auf eine verteilte Weise bereitgestellt wird, wobei die Endgeräteeinrichtung mit dem Mobilfunknetz verbunden ist.

7. Empfangsinstanz (20), die für eine KI/ML-Anwendung verwendet wird, die Empfangsinstanz (20) umfassend:
einen Datenempfänger (21), der sequenziell Eingabedatenelemente einer Vielzahl von Eingabedatenelementen empfängt;
einen Inferenzabschnitt (22), der die Eingabedatenelemente der Vielzahl von Eingabedatenelementen in ein KI/ML-Modell mit mehreren Eingaben sequenziell eingibt, um Inferenzwerte einer Vielzahl von Inferenzwerten sequenziell zu erfassen;
einen Ausgabeabschnitt (23), der Inferenzergebnisse auf einer Basis der jeweiligen Inferenzwerte der Vielzahl von Inferenzwerten sequenziell aktualisiert, um die aktualisierten Inferenzergebnisse auszugeben;
einen Bestimmungsabschnitt (24), der bestimmt, ob ein Bedarf an einem zusätzlichen Eingabedatenelement aus der Vielzahl von Eingabedatenelementen besteht; und
einen Anforderungssender (25), der Rückmeldeinformationen auf einer Basis der Bestimmung sendet, ob ein Bedarf an dem zusätzlichen Eingabedatenelement besteht, wobei die Bestimmung durch den Bestimmungsabschnitt (24) durchgeführt wird,
wobei, wenn der Bestimmungsabschnitt (24) bestimmt, dass ein Bedarf an dem zusätzlichen Eingabedatenelement besteht, der Anforderungssender (25) an die Sendungsinstanz (10) eine Anforderung sendet, das Senden des zusätzlichen Eingabedatenelements zu starten, und
wenn der Bestimmungsabschnitt (24) nach der Sendung der Anforderung, das Senden des zusätzlichen Eingabedatenelements zu starten, bestimmt, dass kein Bedarf an dem zusätzlichen Eingabedatenelement besteht, der Anforderungssender (25) an die Sendungsinstanz (10) eine Anforderung sendet, das Senden des zusätzlichen Eingabedatenelements zu beenden.

8. Empfangsinstanz (20) nach Anspruch 7, wobei
der Bestimmungsabschnitt (24) auf einer Basis eines Genauigkeitsgrades des Inferenzergebnisses bestimmt, ob ein Bedarf an dem zusätzlichen Eingabedatenelement besteht.

9. Empfangsinstanz (20) nach Anspruch 7, wobei
der Bestimmungsabschnitt (24) auf einer Basis einer Verzögerung, die verursacht wird, bis das Inferenzergebnis erhalten wird, bestimmt, ob ein Bedarf an dem zusätzlichen Eingabedatenelement besteht.

10. Empfangsinstanz (20) nach Anspruch 7, wobei
der Bestimmungsabschnitt (24) auf einer Basis einer Differenz in einem Genauigkeitsgrad zwischen einem aktuellen Inferenzergebnis und einem unmittelbar vorhergehenden Inferenzergebnis, bestimmt, ob ein Bedarf an dem zusätzlichen Eingabedatenelement besteht.

11. Empfangsinstanz (20) nach Anspruch 7, wobei
der Ausgabeabschnitt (23) das Inferenzergebnis auf einer Basis eines Vergleichs der Vielzahl von Inferenzwerten ausgibt.

12. Empfangsinstanz (20) nach Anspruch 7, wobei
der Ausgabeabschnitt (23) einen neuesten der Vielzahl von Inferenzwerten als das Inferenzergebnis festlegt; oder
die Empfangsinstanz (20) einer Servereinrichtung bereitgestellt ist, die mit einem Mobilfunknetz verbunden ist; oder
die Empfangsinstanz (20) einem Mobilfunknetz und einer Servervorrichtung auf eine verteilte Weise bereitgestellt wird, wobei die Servervorrichtung mit dem Mobilfunknetz verbunden ist.

13. Datensendungsverfahren, das für eine KI/ML-Anwendung verwendet wird, das Datensendungsverfahren umfassend:
Erfassen ursprünglicher Eingabedaten;
Generieren, aus den ursprünglichen Eingabedaten, einer Vielzahl von Eingabedatenelementen mit reduzierten Datenmengen;
sequenzielles Senden von Eingabedatenelementen der Vielzahl von Eingabedatenelementen; und
Empfangen von Rückmeldeinformationen basierend darauf, ob ein Bedarf an einem zusätzlichen Eingabedatenelement aus der Vielzahl von Eingabedatenelementen besteht,
wobei, wenn eine Anforderung empfangen wird, das Senden des zusätzlichen Eingabedatenelements zu starten, nachdem ein erstes Eingabedatenelement aus der Vielzahl von Eingabedatenelementen gesendet worden ist, Starten des Sendens des zusätzlichen Eingabedatenelements, und
wenn eine Anforderung empfangen wird, das Senden des zusätzlichen Eingabedatenelements zu beenden, Beenden des Sendens des zusätzlichen Eingabedatenelements.

## Revendications

1. Entité de transmission (10) utilisée pour une application d'IA/ML, l'entité de transmission (10) comprenant :
une section d'acquisition (11) qui acquiert des données d'entrée originales ;
un générateur (12) qui génère, à partir des données d'entrée originales, une pluralité d'éléments de données d'entrée avec des quantités de données réduites ;
un transmetteur de données (13) qui transmet séquentiellement des éléments de données d'entrée de la pluralité d'éléments de données d'entrée ; et
un récepteur de requête (14) qui reçoit des informations de rétroaction en fonction de l'existence ou non d'un besoin pour un élément supplémentaire de données d'entrée parmi la pluralité d'éléments de données d'entrée,
dans laquelle lorsque le récepteur de requête (14) reçoit une requête pour commencer à transmettre l'élément supplémentaire de données d'entrée après que le transmetteur de données (13) a transmis un premier élément de données d'entrée parmi la pluralité d'éléments de données d'entrée, le transmetteur de données (13) commence à transmettre l'élément supplémentaire de données d'entrée, et
lorsque le récepteur de requête (14) reçoit une requête pour arrêter de transmettre l'élément supplémentaire de données d'entrée, le transmetteur de données (13) arrête de transmettre l'élément supplémentaire de données d'entrée.

2. Entité de transmission (10) selon la revendication 1, dans laquelle
lorsque le récepteur de requête (14) reçoit la requête pour commencer à transmettre l'élément supplémentaire de données d'entrée après que le générateur (12) a généré le premier élément de données d'entrée, le générateur (12) génère séquentiellement les éléments supplémentaires de données d'entrée.

3. Entité de transmission (10) selon la revendication 1, dans laquelle
les données d'entrée originales sont des données d'image fixe, et
la pluralité d'éléments de données d'entrée sont des éléments de données d'image fixe de résolutions différentes.

4. Entité de transmission (10) selon la revendication 1, dans laquelle
les données d'entrée originales sont des données d'image fixe, et
la pluralité d'éléments de données d'entrée sont des éléments de données d'image fixe de régions partiellement ou complètement différentes.

5. Entité de transmission (10) selon la revendication 1, dans laquelle
l'entité de transmission (10) est fournie à un appareil terminal qui est connecté à un réseau cellulaire.

6. Entité de transmission (10) selon la revendication 1, dans laquelle
l'entité de transmission (10) est fournie à un réseau cellulaire et à un appareil terminal de manière distribuée, l'appareil terminal étant connecté au réseau cellulaire.

7. Entité de réception (20) utilisée pour une application d'IA/ML, l'entité de réception (20) comprenant :
un récepteur de données (21) qui reçoit séquentiellement des éléments de données d'entrée d'une pluralité d'éléments de données d'entrée ;
une section d'inférence (22) qui entre séquentiellement les éléments de données d'entrée de la pluralité d'éléments de données d'entrée dans un modèle d'IA/ML à entrées multiples pour acquérir séquentiellement des valeurs d'inférence d'une pluralité de valeurs d'inférence ;
une section de sortie (23) qui met à jour séquentiellement les résultats d'inférence sur la base des valeurs d'inférence respectives de la pluralité de valeurs d'inférence pour délivrer en sortie les résultats d'inférence mis à jour ;
une section de détermination (24) qui détermine l'existence ou non d'un besoin pour un élément supplémentaire de données d'entrée parmi la pluralité d'éléments de données d'entrée ; et
un transmetteur de requête (25) qui transmet des informations de rétroaction sur la base de la détermination de l'existence ou non d'un besoin pour l'élément supplémentaire de données d'entrée, la détermination étant effectuée par la section de détermination (24),
dans laquelle lorsque la section de détermination (24) détermine l'existence d'un besoin pour l'élément supplémentaire de données d'entrée, le transmetteur de requête (25) transmet, à l'entité de transmission (10), une requête pour commencer à transmettre l'élément supplémentaire de données d'entrée, et
lorsque la section de détermination (24) détermine, après la transmission de la requête pour commencer à transmettre l'élément supplémentaire de données d'entrée, la non-existence d'un besoin pour l'élément supplémentaire de données d'entrée, le transmetteur de requête (25) transmet, à l'entité de transmission (10), une requête pour arrêter de transmettre l'élément supplémentaire de données d'entrée.

8. Entité de réception (20) selon la revendication 7, dans laquelle
la section de détermination (24) détermine l'existence ou non d'un besoin pour l'élément supplémentaire de données d'entrée sur la base d'un degré de précision du résultat d'inférence.

9. Entité de réception (20) selon la revendication 7, dans laquelle
la section de détermination (24) détermine l'existence ou non d'un besoin pour l'élément supplémentaire de données d'entrée sur la base d'un délai provoqué jusqu'à l'obtention du résultat d'inférence.

10. Entité de réception (20) selon la revendication 7, dans laquelle
la section de détermination (24) détermine l'existence ou non d'un besoin pour l'élément supplémentaire de données d'entrée sur la base d'une différence de degré de précision entre un résultat d'inférence actuel et un résultat d'inférence immédiatement précédent.

11. Entité de réception (20) selon la revendication 7, dans laquelle
la section de sortie (23) délivre en sortie le résultat d'inférence sur une base d'une comparaison de la pluralité de valeurs d'inférence.

12. Entité de réception (20) selon la revendication 7, dans laquelle
la section de sortie (23) définit une dernière de la pluralité de valeurs d'inférence comme le résultat d'inférence ; ou
l'entité de réception (20) est fournie à un appareil serveur qui est connecté à un réseau cellulaire ; ou
l'entité de réception (20) est fournie à un réseau cellulaire et à un appareil serveur de manière distribuée, l'appareil serveur étant connecté au réseau cellulaire.

13. Procédé de transmission de données utilisé pour une application d'IA/ML, le procédé de transmission de données comprenant :
l'acquisition de données d'entrée originales ;
la génération, à partir des données d'entrée originales, d'une pluralité d'éléments de données d'entrée avec des quantités de données réduites ;
la transmission séquentielle d'éléments de données d'entrée de la pluralité d'éléments de données d'entrée ; et
la réception d'informations de rétroaction en fonction de l'existence ou non d'un besoin pour un élément supplémentaire de données d'entrée parmi la pluralité d'éléments de données d'entrée,
dans lequel lorsqu'une requête pour commencer à transmettre l'élément supplémentaire de données d'entrée est reçue après qu'un premier élément de données d'entrée parmi la pluralité d'éléments de données d'entrée a été transmis, la transmission de l'élément supplémentaire de données d'entrée est commencée, et
lorsqu'une requête pour arrêter de transmettre l'élément supplémentaire de données d'entrée est reçue, la transmission de l'élément supplémentaire de données d'entrée est arrêtée.
